# EUROPÄISCHE PATENTSCHRIFT

(11) **EP 1 049 574 B1**
(45) Veröffentlichungstag und Bekanntmachung des Hinweises auf die Patenterteilung: **28.05.2003**
(21) Anmeldenummer: 99907248.1
(22) Anmeldetag: 18.01.1999
(51) Int. Cl.: B29B 17/00, E02B 3/04

(54) **ELEMENT AUS EINER MEHRZAHL WAAGERECHT UND SENKRECHT VERLAUFENDER STREIFEN UND VERFAHREN ZUR HERSTELLUNG VON ELEMENTEN DURCH VERKNÜPFUNG GESCHLOSSENER RINGE**
ELEMENT COMPRISED OF A PLURALITY OF STRIPS RUNNING IN A HORIZONTAL AND VERTICAL MANNER, AND A METHOD FOR PRODUCING ELEMENTS BY CONNECTING CLOSED RINGS
ELEMENT COMPRENANT UNE PLURALITE DE BANDES HORIZONTALES ET VERTICALES ET PROCEDE PERMETTANT DE PRODUIRE DES ELEMENTS PAR COMBINAISON D'ANNEAUX FERMES

(30) Priorität: 19.01.1998 DE 19801694; 25.05.1998 DE 19823244
(43) Veröffentlichungstag der Anmeldung: 08.11.2000
(73) Patentinhaber: Streuer, Renate, 30519 Hannover (DE)
(72) Erfinder: Weiland, Gerd, 30173 Hannover (DE); Streuer, Renate, 30519 Hannover (DE)
(74) Vertreter: Gerstein, Hans Joachim, Dipl.-Ing.
(86) Internationale Anmeldenummer: DE9900104
(87) Internationale Veröffentlichungsnummer: WO99036240

(56) Entgegenhaltungen:
- WO-A-99/12717
- US-A- 3 842 606
- US-A- 4 150 909

## Beschreibung

Die Erfindung betrifft ein Element aus einer Mehrzahl waagerecht und senkrecht verlaufender Streifen, welche gemeinsame Kreuzungspunkte aufweisen sowie ein Verfahren zur Herstellung von Elementen durch Verknüpfung geschlossener Ringe.

Derartige Elemente, bei denen einmal die Kettfäden und dann wieder die Schußfäden oben liegen und sich derart überkreuzen, daß ein haltbares Gewebe gebildet ist, sind allgemein bekannt. Derartige, beispielsweise als Matten ausgebildete Elemente bestehen aus einer Vielzahl von-Materialien und finden Anwendung für verschiedene Zwecke. So ist es beispielsweise aus dem DE-GM G 94 10 292.9 bekannt, Gummimatten aus Streifen der Laufflächen von Altreifen herzustellen und diese Gummimatten zur Stabilisierung von Deichen und Böschungen, zur Dünenbefestigung, für den Wege- und Radwegebau einzusetzen. Grundsätzlich ist zwar anzuerkennen, daß das Recycling insbesondere von Altreifen durchaus begrüßenswert ist, da die Verwendung von Altreifen für sinnvolle Zwecke dem heutigen Umweltschutzgedanken Rechnung trägt, jedoch sind dem Einsatz derartiger aus Altreifen gewonnener Matten Grenzen gesetzt.

Dies liegt daran, daß die Haltbarkeit und Stabilität derartiger einfacher Matten aus Streifen von Laufflächen von Altreifen nicht für die betreffenden Einsatzzwecke ausreichend ist, da insbesondere aus der DE-GM G 94 10 292.9 bekannte Matten nur aufwendig herzustellen sind und die Verwendung von metallenen Krampen und dergleichen erfordern. Zudem wird hier beim Zerschneiden der Laufflächen der verwendeten Altreifen deren Metalleinlage bloß gelegt, wodurch die Gefahr entsteht, daß diese Metalleinlage korrodieren kann.

Was die stoffliche Verwertung und Verwendung von Altreifen für die Böschungssicherung für den Flutschutz anbelangt, sind bereits Vorschläge gemacht worden, beispielsweise in der DE-AS 25 46 430, der DE-OS 33 08 651 A1 und der bereits genannten DE-GM G 954 10 292.9. Die Verwendung von gewebten Matten oder mattenähnlichen Gebilden, welche nicht aus Altreifenrecyclingprodukten bestehen, zur Stabilisierung rutschgefährdeter Erdmassen und zur Boden- oder Uferbefestigung ist ebenfalls bereits vorgeschlagen worden, beispielsweise in der DE 36 30 969 C2, in der DE-AS 22 17 150 und der DE-AS 19 31 537.

Diesen und ähnlichen mattenartigen Gebilden ist der Nachteil gemeinsam, daß sie nur eine begrenzte Flexibilität aufweisen, nur in begrenztem Umfang und mit erheblichem Aufwand mit weiteren Matten verbunden werden können und im Bedarfsfalle nur in begrenztem Umfang zur Verfügung stehen und bei der Verlegung vor Ort nicht von Hand hergestellt werden können. Ein Einsatz dieser bekannten Elemente ist zudem nur eingeschränkt möglich, da vorgefertigte Elemente sich nur bedingt an Geländeformationen anpassen lassen.

Aufgabe der Erfindung ist es, ein Element der eingangs genannten Art zu schaffen, welches leicht herzustellen sein soll, welches preisgünstig ist, und welches für Bauzwecke eine ausreichende mechanische Stabilität, eine genügend hohe Flexibilität und gute Dämpfungseigenschaften gegenüber mechanischen Beanspruchungen aufweisen und welche mit weiteren Elementen schnell und einfach verbindbar sein soll.

Diese Aufgabe wird mit einem Element der eingangs genannten Art gelöst, welches die Merkmale des Patentanspruchs 1 aufweist. Zudem schließt die Erfindung auch ein Verfahren gemäß dem unabhängigen Anspruch 12 zur Herstellung solcher Elemente ein.

Erfindungsgemäß zeichnet sich das Element dadurch aus, daß die Streifen jeweils geschlossene Ringe sind, wobei jeweils ein Ring abwechselnd die rechtwinklig zu ihm angeordneten Ringe umschließt bzw. durch diese Ringe hindurch geführt ist, wobei ein vorderes Ende jeweils eines Ringes durch ein hinteres Ende jeweils eines rechtwinklig zu ihm angeordneten Ringes geführt ist.

Kern der Erfindung ist eine völlig neue Art der Verbindung rechtwinklig zueinander angeordneter Streifen mit gemeinsamen Kreuzungspunkten, welche sich gezielt von bislang bekannten Knüpfungs- oder Bindungsarten abwendet.

In der nachveröffentlichten DE-OS 197 40 413 A1, die Teil der WO 99/12717 A ist, wird ein Verfahren und eine Vorrichtung zum Verarbeiten von Reifen beschrieben, bei dem Reifenstreifen zu grobmaschigen Flächengebilden und Körpern verflochten werden. Die Flächengebilde werden in einem Stück miteinander verflochten. Im Unterschied hierzu ist in der Erfindung vorgesehen, Elemente mit quadratischer Grundfläche zu bilden, die Ösen aufweisen, wodurch die quadratischen Basiselemente aneinanderfügbar sind.

Auf überraschend einfache Weise läßt sich erfindungsgemäß ein mattenartiges Element schaffen, welches im Gegensatz zu herkömmlichen Lösungen aus geschlossenen Ringen besteht, welche in neuartiger Weise so miteinander verflochten sind, daß rechtwinklig zueinander angeordnete Ringe abwechselnd sich umschließen bzw. von den rechtwinklig zueinander angeordneten Ringen umhüllt sind.

Durch diese neuartige Technik stellen sich die Ringe als flache langgestreckte Ringe mit wellenförmigen Verlauf und stellt sich das mittels dieser Ringe gewonnene Element als geschlossener Körper mit quadratischer Grundfläche dar, welcher durch die Ösen mittels Verbindungsmitteln mit weiteren identischen Elementen auf einfachste Weise verbunden werden kann. Es sind zwar auch Elemente aus einfachen Streifen bekannt, deren über den Streifenverbund hinausragenden Streifenenden umgenäht sind und auf diese Weise Ösen bilden, jedoch besitzen diese auch aus den Laufflächen von Altreifen gewebten Körper keine ausreichende mechanische Festigkeit und in Bezug auf mechanischen Druck nur eine geringe Dämpfungseigenschaft, welche nicht für alle Einsatzzwecke ausreichend ist.

Vorteilhafterweise steht ein Ende über die Seitenkante eines rechtwinklig zu ihm angeordneten Ring derart hervor, daß eine Öse und/oder Lasche zur Lagerung eines weiteren Elementes und/oder Verbindungsmittels entsteht.

Die Elemente können gemäß den jeweiligen Anforderungen beliebig miteinander kombiniert und verbunden werden. Alle Formen werden vorzugsweise aus quadratischen Basiselementen hergestellt, welche mit Hilfe von Verbindungselementen aneinandergefügt werden können. Das Basiselement besteht aus waagerecht und senkrecht zueinander verlaufender, flach zusammen ge-drückter Ringe. Als Ringe werden vorzugsweise die Laufflächen von Altreifen verwendet.

Durch die Verknüpfung von geschlossenen Ringen können "Gewebe" bzw. Textilien - vorzugsweise Geotextilien - von beliebiger Größe, in beliebiger Form und mit verschiedenen Verknüpfungsarten und somit auch verschiedenen Eigenschaften hergestellt werden, wobei nicht notwendigerweise Verbindungselemente benötigt werden. Die "Gewebe" lassen sich in allen Bereichen verwenden, in denen robuste, belastbare und wetterbeständige Geotextilien benötigt werden.

Für die Verknüpfung können nicht nur zusammengedrückte Ringe, sondern auch U-förmig gebogene Ringe verwendet werden. Hieraus lassen sich mehrwandige Basis-Kompaktelemente mit verschiedenen Ausprägungen herstellen. Diese bilden ein Baukasten-system, mit dem Bauelemente von beliebiger Größe und in vielfältigen Formen gebildet werden können. Darüber hinaus lassen sich aus den Basis-Kompaktelementen flexible, belastbare Bänder und Ringe wie auch Hohlkörper herstellen, die in vielen industriellen Bereichen zur Anwendung kommen können.

In einer vorteilhaften Ausgestaltung der Erfindung ist vorgesehen, daß die Ringe jeweils aus elastischem Material bestehen, insbesondere daß sie aus der Lauffläche eines Fahrzeugreifens bestehen. Hierdurch läßt sich auf überraschend einfache Weise ein Element schaffen, welche den überwiegenden Teil anfallender Altreifen nutzt, welche sonst nur sehr schlecht weiter verwertet werden könnten.

Um ein erfindungsgemäßes Element unter Verwendung von Laufflächen von Fahrzeugreifen zu schaffen, benötigt man in der Regel acht Altreifen, deren Anzahl durch das Verhältnis von Länge/Breite der Laufflächen vorgegeben ist. Bei der Verwendung der Laufflächen beispielsweise von Sonderreifen kann eine andere Anzahl von Laufflächenringen gewählt werden. Vorzugsweise finden aber normale Altreifen mit einem üblichen Durchmesser von 13 bis 15 Zoll Verwendung.

Vorteilhaft an dieser Ausgestaltung ist insbesondere, daß diese Laufflächen bereits mechanische Eigenschaften besitzen, welche in vorteilhafter Weise nutzbar gemacht werden können. Die stofflichen und mechanischen Eigenschaften der Laufflächen von Automobilreifen ermöglichen einen sehr hohen Grad an Dämpfung gegen Stoßbelastungen und sie bieten auch Schutz gegen höchste mechanische Beanspruchungen, was insbesondere durch die Stahleinlagen in der Lauffläche ermöglicht wird, wobei diese Stahleinlagen bei dem erfindungsgemäßen Element nicht korrodieren können, da die Laufflächenringe nicht durchtrennt werden.

Die Eigenschaften von Laufflächen von Kraftfahrzeugreifen in Verbindung mit der neuartigen Verbindungstechnik des erfindungsgemäßen Elements läßt sich für eine Vielzahl von Anwendungsbereichen nutzen. Hier sind insbesondere der Flutschutz, die Deichsicherung und die Deichsanierung zu nennen, worauf in der Beschreibung näher einzugehen sein wird.

In einer praktischen Ausgestaltung der Erfindung sind die durch die Ösen des Elements führbaren Verbindungsmittel Stangen, Ketten, Seile, Rohre oder dergleichen. Mit diesen Verbindungsmitteln ist das Element auch auf einfachste Weise mit weiteren Elementen verbindbar. Um beispielsweise zwei Elemente miteinander zu verbinden, ist es nur nötig, die beiden Elemente auf Stoß aneinander zu legen und ein Verbindungsmittel durch die Ösen der beiden Elemente zu führen, wodurch die Verbindung von zwei aneinander anstoßenden Elementen bereits hergestellt ist. Hierdurch läßt sich eine Vielzahl erfindungsgemäßer Elemente miteinander zu großflächigen Matten oder Planen und/oder mit anderen Körpern, welche ebenfalls aus den erfindungsgemäßen Elementen gebildet sein können, verbinden.

Derart zusammengefügte Matten oder Planen lassen sich beispielsweise als Unterlage im Straßenbau, als Tragegurt für Großlasten, als geräuschdämpfendes Bahnschienenbett oder zur Sicherung von Mülldeponien gegen Abrutschen einsetzen. Auch eine Verwendung einer aus einer Vielzahl von Elementen bestehenden Matte als Sichtschutzwand ist denkbar, wobei diese durch taschenartige Hohlräume zwischen den Ringen der Elemente leicht und einfach zu begrünen ist.

In einer vorteilhaften Ausgestaltung der Erfindung ist das Element mit fünf weiteren identischen Elementen zu einem Würfel verbindbar. Ein derartiger Würfel welcher durch die durch die Ösen der einzelnen Elemente geführten Verbindungsmittel auf einfachste Weise zu schaffen ist, läßt sich für eine Vielzahl von Verwendungszwecken einsetzen. Beispielsweise ist es mit einem derartigen Würfel möglich, schnell und einfach eine Mauer für Flutschutzzwecke, eine Lärmschutzwand, eine Prallschutzwand oder ähnliches herzustellen.

Hierbei kann in einer vorteilhaften Ausgestaltung vorgesehen sein, daß in den Würfel ein mit Wasser, mit Luft oder mit festem Material füllbarer Sack einführbar ist. Ein derartiger Sack kann die Eigenstabilität des aus den erfindungsgemäßen Elementen geschaffenen Würfels noch weiter erhöhen. Zudem läßt sich mit einem derartigen Sack der Hohlraum des Würfels in positiver Weise nutzen, indem er nämlich, je nach Füllstoff, gezielt tariert werden kann, d.h., er kann hierdurch schwimmend, im Wasser schwebend oder sinkend ausgelegt werden. Mit luftgefüllten Würfeln lassen sich beispielsweise Schwimmplattformen oder Notstege schaffen.

Das Element kann gemäß einer praktischen Ausgestaltung der Erfindung auch mit zwei weiteren identischen Elementen zu einem offenen regulärem Prisma in Gestalt eines Dreiecks verbindbar sein. Hierdurch entsteht ein zeltartiges Gebilde, wie es für bestimmte Anwendungszwecke wünschenswert sein und welches mit weiteren Elementen verbunden werden kann.

In einer weiteren vorteilhaften Ausgestaltung der Erfindung ist vorgesehen, daß das Element mit einem Krallanker verbindbar ist. Ein derartiger Krallanker kann dann zum Einsatz gelangen, wenn eine Vielzahl erfindungsgemäßer Elemente für Flutschutzzwecke eingesetzt werden soll. Der Krallanker kann eine Grundplatte aufweisen, deren Außenabmessungen den Abmessungen des Elements entspricht und sich somit problemlos beispielsweise in einen matten- oder planenartigen Verbund integrieren läßt. Um den Krallanker schnell und einfach mit wenigstens einem Element verbinden zu können, kann der Krallanker an seinen Außenkanten Ösen aufweisen, mittels derer eine schnelle und einfache, scharnierartige Verbindung mit wenigstens einem Element möglich ist, ähnlich der Verbindung von wenigstens zwei Elementen miteinander.

Gemäß eines Verfahrens zur Herstellung eines Elements ist vorgesehen, daß bei einer der Anzahl der Ringe des Elements entsprechenden Anzahl von Kraftfahrzeugreifen deren Seitenwände und gummiummantelte Felgenringe abgetrennt werden, und daß die verbleibenden Laufflächenringe zu einem Element verbunden werden, wobei jeweils ein Laufflächenring abwechselnd die rechtwinklig zu ihm angeordneten Laufflächenringe umschließt bzw, durch diese Laufflächenringe hindurch geführt ist, wobei ein vorderes Ende jeweils eines Laufflächenringes durch ein hinteres Ende jeweils eines rechtwinklig zu ihm angeordneten Laufflächenringes geführt ist und über die Seitenkante dieses rechtwinklig zu ihm angeordneten Laufflächenringes derart hervorsteht, daß eine Öse zur Lagerung von Verbindungsmitteln entsteht.

Bei diesem Verfahren werden vor allem Altreifen in positiver Weise einer weiteren Nutzung zugeführt, welche deutlich über die normale Nutzungsdauer eines Fahrzeugreifens hinausgeht.

Zu betonen ist, daß das erfindungsgemäße Element aber nicht nur aus den Laufflächen von Altreifen herzustellen ist, sondern daß dafür alle denkbaren geschlossenen Ringe verwendet werden können, beispielsweise aus Geotextilien, aus Kunststoffolien und -tonnen, aus Blechringen und dergleichen.

Weitere Vorteile und Ausgestaltungen der Erfindung werden anhand der nachfolgenden Zeichnungen, welche Ausführungsbeispiele darstellen, näher beschrieben. Es zeigen:
- Fig. 1: ein erfindungsgemäßes Element in perspektivischer Darstellung,
- Fig. 2: ein erfindungsgemäßes Element im Schnitt entlang der Linie A - A' aus Fig. 1,
- Fig.3: ein Detail des erfindungsgemäßen Elements,
- Fig. 4a-4e: Verbindungsmittel des erfindungsgemäßen Elements,
- Fig.5: eine beispielhafte Darstellung mehrerer erfindungsgemäßer Elemente in Draufsicht,
- Fig. 6: die Verbindung mehrerer erfindungsgemäßer Elemente zu einem offenen Würfel in perspektivischer Darstellung,
- Fig. 7: einen aus sechs erfindungsgemäßen Elementen zusammengefügten Würfel in perspektivischer Darstellung,
- Fig. 8: eine aus fünf Würfeln aus Fig. 7 hergestellte Wand in perspektivischer Darstellung,
- Fig.9 - 11: einen mit dem erfindungsgemäßen Element verbundenen Krallanker von vorne, von der Seite und von unten,
- Fig. 12: die beispielhafte Verwendung einer Vielzahl erfindungsgemäßer Elemente zur Deicherhöhung,
- Fig. 13: die beispielhafte Verwendung einer Vielzahl erfindungsgemäßer Elemente zur Anlage eines Sturmflutnotdeiches, und
- Fig. 14: schematisch die Verfahrensschritte zur Gewinnung eines Ringes des erfindungsgemäßen Elements aus einem Altreifen,
- Fig. 15 a-c: Flächendeckende Matte mit geradliniger Ringanordnung
a) Grundelement
b) Fortsetzung der Verknüpfung
c) Matte
- Fig. 16 a-c: Flächendeckende Matte mit diagonaler Ringanordnung,
a) Grundelement,
b) Fortsetzung der Verknüpfung,
c) Matte,
- Fig. 17 a-c: Gelochte Matte mit diagonaler Ringanordnung
a) Grundelement,
b) Fortsetzung der Verknüpfung,
c) Matte,
- Fig. 18 a-c: Basis-Kompaktelement und Montageablauf zur Verwendung mit einem erfindungsgemäßen Element,
- Fig. 19 a-c: Basis-Kompaktelement mit einer kurzen Doppellasche und Montageablauf zur Verwendung mit einem erfindungsgemäßen Element,
- Fig. 20 a-e: Basis-Kompaktelement mit einer langen Doppellasche und Montageablauf zur Verwendung mit einem erfindungsgemäßen Element,
- Fig. 21 a-d: Basis-Kompaktelement mit zwei rechtwinklig zueinander angeordneten Doppellaschen und Montageablauf zur Verwendung mit einem erfindungsgemäßen Element,
- Fig. 22 a-c: Basis-Kompaktelement mit zwei versetzt gegenüberliegenden Doppellaschen und Montageablauf zur Verwendung mit einem erfindungsgemäßen Element,
- Fig. 23 a-b: Basis-Kompaktelement mit drei rechtwinklig zueinander angeordneten Doppellaschen und Montageablauf zur Verwendung mit einem erfindungsgemäßen Element,
- Fig. 24 a-f: Kompakte Bauelemente zur Verwendung mit einem erfindungsgemäßen Element,
- Fig. 25 a-d: Bänder und Ringe mit hoher Elastizität zur Verwendung mit einem erfindungsgemäßen Element,
- Fig. 26 a-c: Hohlkörper zur Verwendung mit einem erfindungsgemäßen Element,
- Fig. 27: Modul C,
- Fig. 28: Blockbildung aus Modul C.

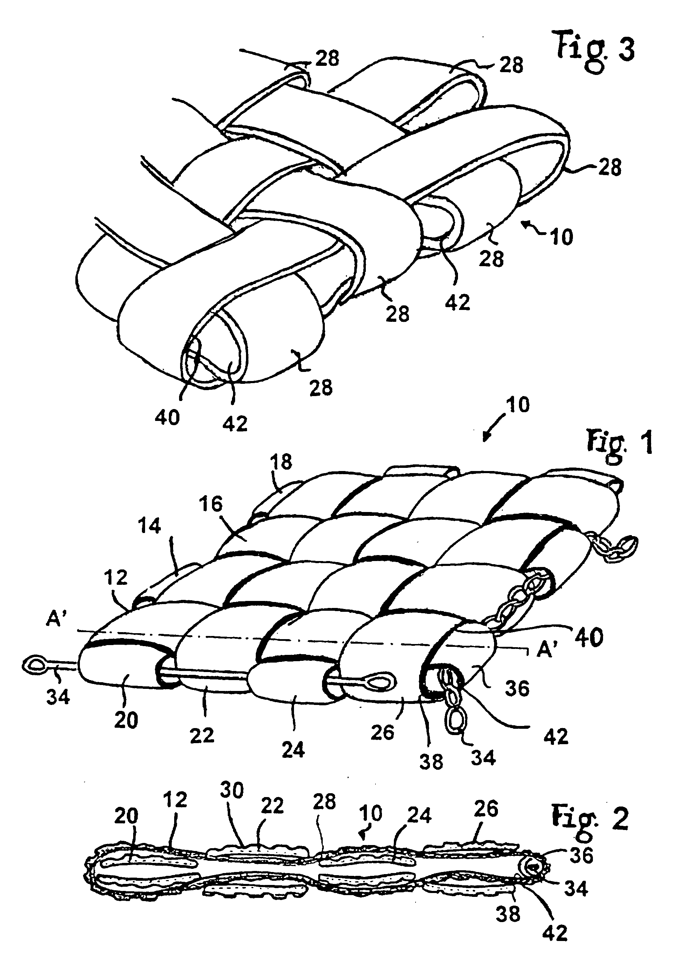

In den Fig. 1 bis 3 ist der grundsätzliche Aufbau eines erfindungsgemäßen Elements 10 dargestellt. Dieses besteht, wie insbesondere Fig. 1 zu entnehmen ist, aus einer Mehrzahl waagerecht verlaufender, zusammen gedrückter Ringe 12, 14, 16, 18 und aus einer Mehrzahl senkrecht verlaufender, zusammen gedrückter Ringe 20, 22, 24, 26, d. h., aus jeweils einer gleichen Anzahl waagerechter Ringe 12 - 18 und senkrechter Ringe 20 - 26. Die Ringe 12 - 26 sind dabei jeweils geschlossene Ringe 28. Jeder Ring 28 ist aus der Lauffläche 30 eines zerteilten Automobilreifens 32 hervorgegangen, worauf noch einzugehen sein wird.

Zu dem in Fig. 1 dargestellten Element 10 gelangt man auf folgende Weise:

Durch den waagerechten Ring 12 wird von oben der senkrechte Ring 20 geschoben. Der senkrechte Ring 22 wird von rechts über den waagerechten Ring 12 geschoben. Der senkrechte Ring 24 wird wiederum von oben durch den waagerechten Ring 12 gesteckt, der senkrechte Ring 26 wird dann wie der senkrechte Ring 22 von rechts über den waagerechten Ring 12 geschoben. Zu dem fertigen Element 10 werden dann noch die waagerechten Ringe 14, 16, 18 benötigt. Nun wird der waagerechte Ring 14 von links durch den senkrechten Ring 20 gesteckt. Da der waagerechte Ring 14 nun über und unter den senkrechten Ring 22 laufen muß, empfiehlt es sich, den senkrechten Ring 22 soweit nach unten zu ziehen, bis er dann durch den waagerechten Ring 14 wieder nach oben geführt wird.

Nun wird der waagerechte Ring 14 weiter nach rechts durch den senkrechten Ring 24 geschoben. Um den waagerechten Ring 14 jetzt über und unter den senkrechten Ring 26 zu bringen ist analog wie mit dem senkrechten Ring 22 zu verfahren, d. h., der senkrechte Ring 26 ist nach unten zu ziehen, der waagerechte Ring 14 ist nach rechts zu schieben und dann ist der senkrechte Ring 26 wieder nach oben, nun aber durch den waagerechten Ring 14 zu führen. Die Einführung des waagerechten Ringes 16 kann jetzt von rechts erfolgen, wobei der senkrechte Ring 24 und der senkrechte Ring 20 nach unten zu schieben sind, um danach durch den waagerechten Ring 16 geführt wieder hochgeschoben zu werden. Die Einbringung des waagerechten Ringes 18 erfolgt analog zum waagerechten Ring 14. Abschließend kann das Element 10 durch Verbindungselemente 34 fixiert und mit weiteren auf gleiche Weise gewonnenen Elementen 10 verbunden werden.

Auf diese Weise erhält man ein Element 10, bei dem jeweils ein Ring 28 abwechselnd die rechtwinklig zu ihm angeordneten Ringe 28 umschließt bzw. von diesen Ringen 28 umschlossen ist. Ein vorderes Ende 36 jeweils eines Ringes 28 ist jeweils durch ein hinteres Ende 38 jeweils eines rechtwinklig zu ihm angeordneten Ringes 28 geführt und steht über die Seitenkante 40 dieses rechtwinklig zu ihm angeordneten Ringes 28 derart hervor, daß eine Öse 42 zur Lagerung eines Verbindungselementes 34 entsteht. Dies ist insbesondere in der rechten unteren Bildhälfte von Fig.1 gut zu erkennen.

Das erfindungsgemäße Element 10 ist in Fig. 2 im Schnitt entlang der Linie A- A' aus Fig. 1 dargestellt.

Ein Ausschnitt des erfindungsgemäßen Elements 10 ist in Fig. 3 im Detail während der Verknüpfungsphase der einzelnen Ringe 28 dargestellt, wobei in Fig. 3 zu erkennen ist, daß während der Verknüpfungsphase die einzelnen Ringe 28 sich noch locker umschließen.

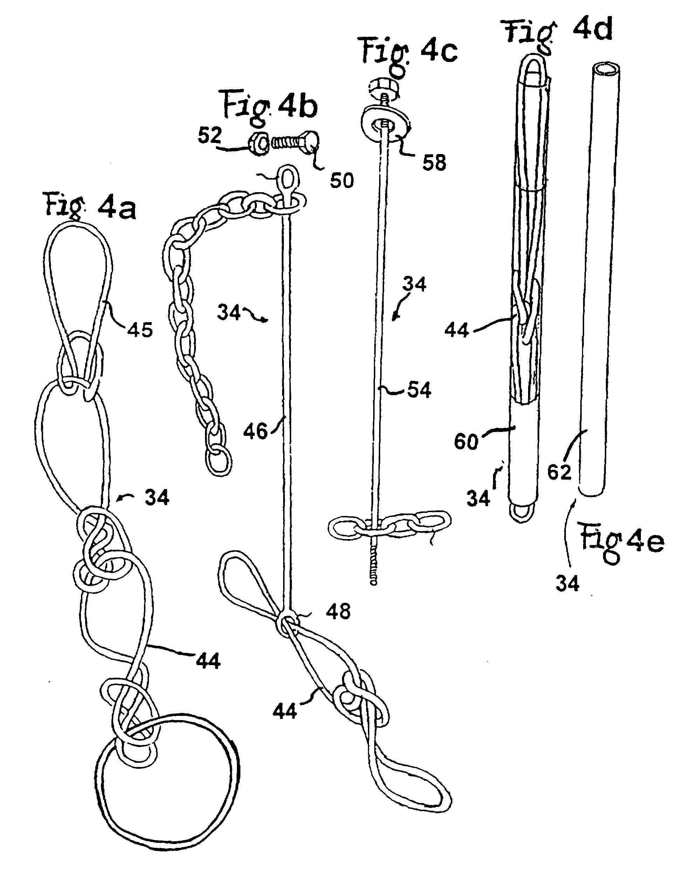

Beispiele für geeignete Verbindungsmittel 34 zur Verbindung eines erfindungsgemäßen Elements mit mehreren erfindungsgemäßen Elementen oder mit anderen Körpern sind in den Fig. 4a bis 4e dargestellt. In Fig. 4a ist das Verbindungselement 34 eine Kette 44 aus einer Mehrzahl von Felgenringen 45, welche bei dem bei der Erfindung zur Anwendung gelangenden Recycling von Altreifen anfallen. Das in Fig. 4b dargestellte Verbindungselement 34 ist ein Verbindungsstab 46 mit an seinen Enden angeformten Augen 48, durch welche weitere Verbindungselemente 34 hindurchgeführt werden können, beispielsweise die Kette 44 aus Fig. 4a oder eine Schraube 50 mit Mutter 52. In Fig. 4c ist ein Verbindungselement 34 dargestellt, welches sich als Gewindestab 54 mit Stahlkette 56 und Sicherungsscheibe 58 darstellt.

In Fig. 4d ist die als Verbindungselement 34 dienende Kette 44 aus Fig. 4a dargestellt, welche in ein Montagerohr 60 eingeführt ist, mit dessen Hilfe die Kette 44 auf leichte Weise durch Ösen 42 eines Elements 10 geführt werden kann. In Fig. 4e ist das Verbindungselement 34 ein Rohr 62.

Die in den Fig. 4a bis 4e dargestellten Verbindungselemente 34 dienen alle dazu, durch die Ösen 42 von Elementen 10 geführt zu werden, um ein Element 10 mit weiteren Elementen 10 zu verbinden oder um ein Element 10 am Grund und Boden anzubinden.

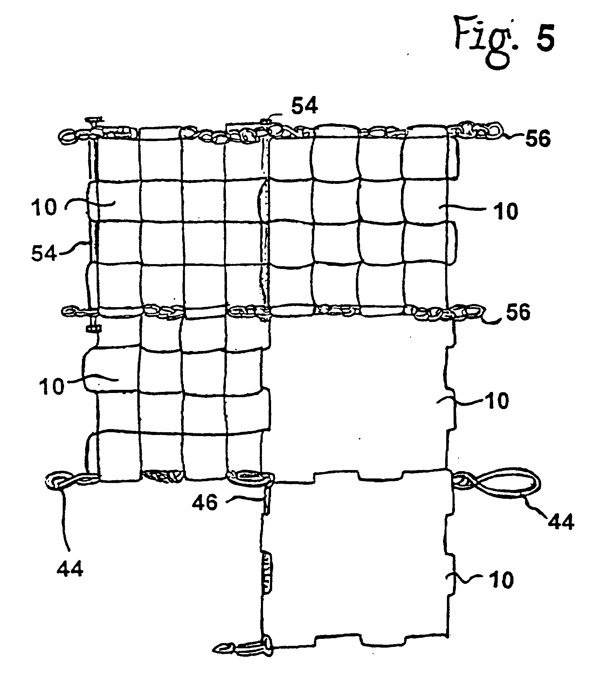

Die Möglichkeit, mehrere Elemente 10 miteinander zu verbinden, ist beispielhaft in Fig. 5 dargestellt. Dort sind fünf Elemente 10 durch Gewindestäbe 54, durch Stahlketten 56, durch einen Verbindungsstab 46 und durch Ketten 44 aus Felgenringen 45 miteinander verbunden. Durch die Verbindung einer Vielzahl von Elementen 10 miteinander läßt sich eine beliebig große Matte zusammenfügen, je nach Anwendungsbedürfnis.

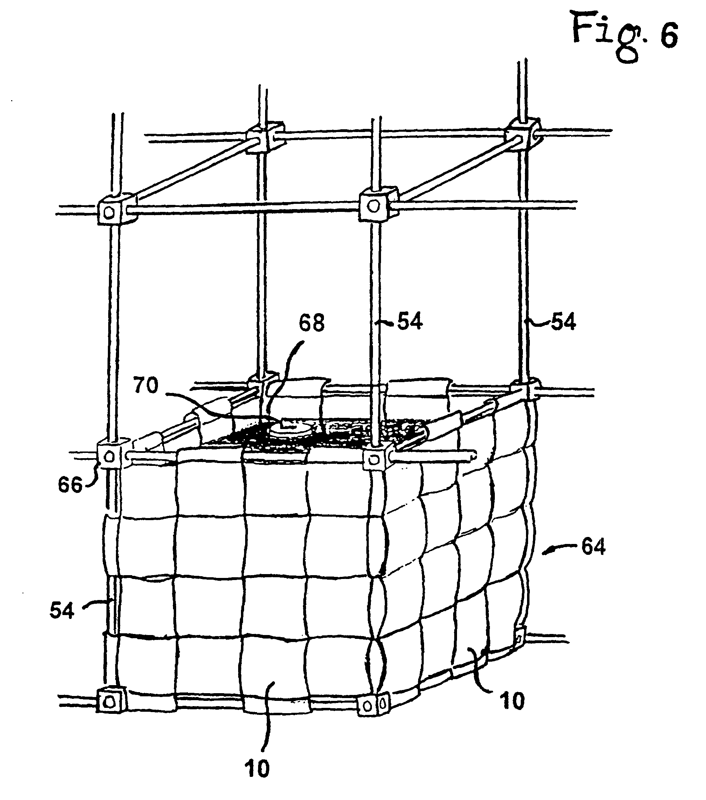

In den Fig. 6 bis 8 ist die Zusammenstellung mehrerer Elemente 10 zu einem bzw. zu mehreren Würfeln 64 dargestellt. Der in Fig. 6 dargestellte Würfel 64 wird durch Stäbe 54 zusammengehalten, wobei die Stäbe 54 mit ihren Enden in Steckwürfeln 66 eingesteckt sind. Obwohl in Fig. 6 ein nach oben offener Würfel 64 dargestellt ist, ist es auch möglich, auf die in Fig. 6 dargestellte Weise einen allseits geschlossenen Würfel zu schaffen, wobei durch die Steckwürfel 66 der Würfel 64 mit weiteren Würfeln 64 verbunden werden kann oder als Basis für eine gerüstähnliche und flexible Struktur dienen kann. Wie weiter in Fig. 6 zu erkennen ist, ist der Hohlraum 68 des Würfels 64 mit einem Sack 70 ausgefüllt, welcher mit Luft, Wasser oder mit festem Material, beispielsweise Sand, auffüllbar ist. Dieser Sack 70 dient der Tarierung, der Stabilisierung und der Beschwerung des Würfels 64.

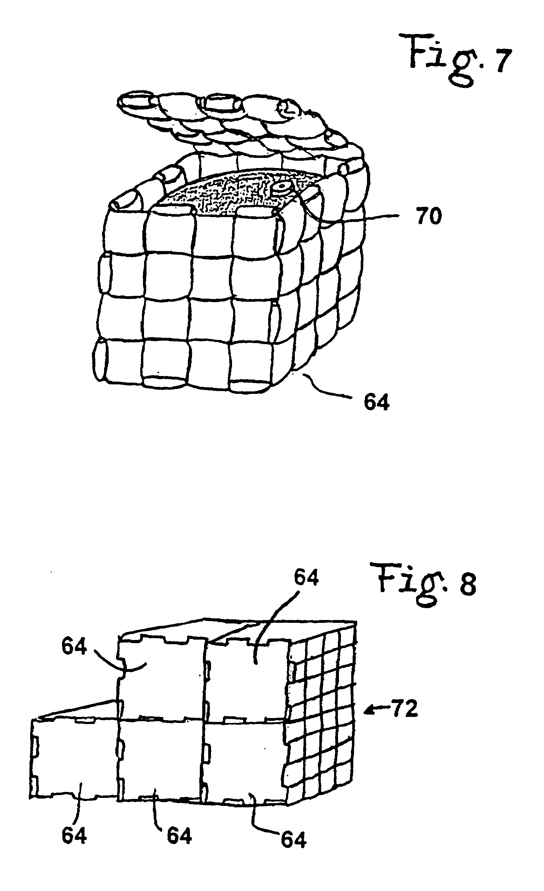

In Fig. 7 ist ebenfalls ein Würfel 64 dargestellt, welcher ebenfalls mit einem Sack 70 ausgefüllt ist, wobei die beim Würfel 64 aus Fig. 7 verwendeten Verbindungsmittel nicht über die Seitenkanten des Würfels 64 hervorragen.

In Fig. 8 ist schematisch die Zusammenstellung von fünf Würfeln 64 zu einer Mauer 72 dargestellt. Auf die zuvor beschriebene Art und Weise läßt sich einfach und schnell mit einer Vielzahl von aus Elementen 10 und Verbindungselementen 34 zusammengefügten Würfeln 64 eine Mauer, Wand oder dergleichen zusammenstellen und aufbauen.

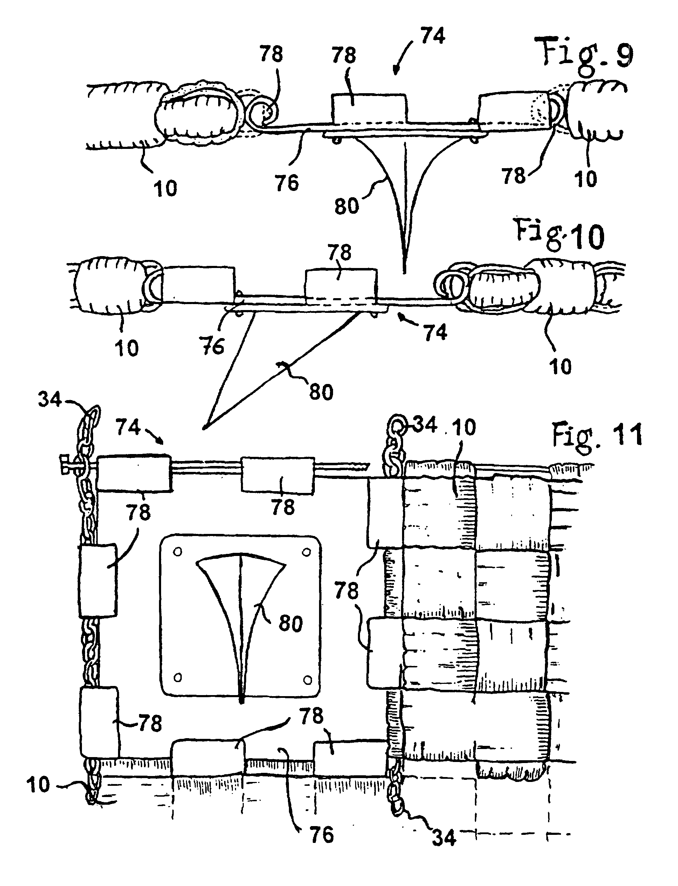

In den Fig. 9 bis 11 ist die Verbindung von Elementen 10 mit einem Krallanker 74 dargestellt. Dieser Krallanker 74 weist eine Ankerplatte 76 mit seitlich angeformten Ösen 78 zur Verbindung mit Elementen 10 auf. An der Unterseite der Ankerplatte 76 ist ein Ankerhaken 80 befestigt, welcher dazu dient, die an den Krallanker 74 befestigten Elemente 10 am Boden beispielsweise eines Deiches, vorzugsweise eines Küstendeiches, zu verankern. Die Ösen 78 dienen dazu, den Krallanker 74 mit wenigstens einem Element 10 mittels Verbindungselementen 34 zu verbinden, wobei diese Verbindungselemente 34 den in den Fig. 4a bis 4e dargestellten Verbindungsmitteln 34 entsprechen können.

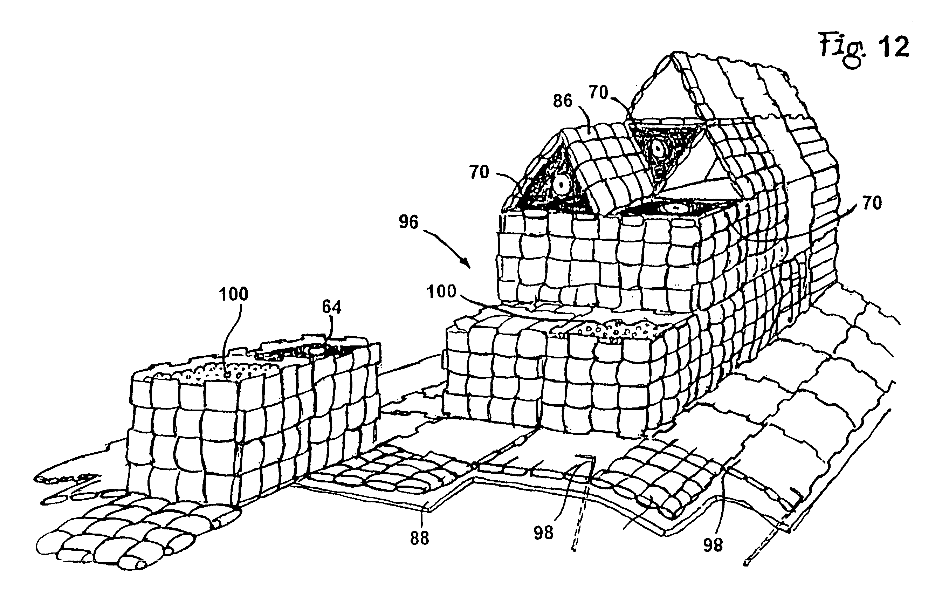

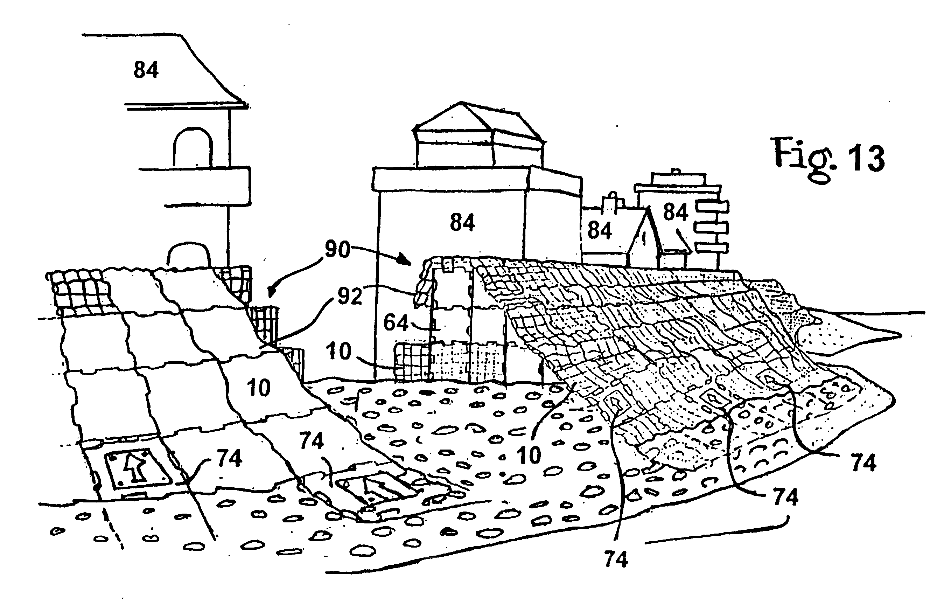

In den Fig. 12 und 13 ist beispielhaft die Verwendung erfi.ndungsgemäßer Elemente 10 für Flutschutzzwecke dargestellt. In Fig. 12 ist ein Hochwassergefährdeter Flußdeich 82 dargestellt, der mittels einer aus einer Vielzahl von Elementen 10 gebildeten Deichkrone 96 erhöht ist. Diese Deichkrone 96 besteht aus einer Matte 92 aus einer Vielzahl von Elementen 10, aus Würfeln 64, welche in die Matte 92 integriert und mit dieser durch Verbindungsmittel 34 verbunden sind und aus mit einem Teil der Würfel 64 verbundenen Dreiecken 86, welche eine zelt- oder dachartige Struktur bilden. Die Würfel 64 und die Dreiecke 86 sind teilweise mit Sand 100 bzw. mit einem Sack 70 ausgefüllt, wobei der Sack mit einem geeigneten Stoff gefüllt ist. Zur Abdichtung des Flußdeiches 82 ist zwischen Flußdeich 82 und Matte 92 eine Plastikplane 88 angeordnet. Die Matte 92 ist mit dem Flußdeich 82 durch geeignete Mittel verbunden, beispielweise mittels eines in Fig. 12 angedeuteten Fixierstabes 98.

In Fig. 13 ist beispielhaft die Errichtung eines Notdeiches 90 im Strandbereich einer Meeresküste aus einer Vielzahl von Elementen 10 dargestellt. Durch diesen Notdeich 90 sollen Gebäude 84 vor dem Hochwasser und dem Wellengang beispielsweise einer Sturmflut geschützt werden. Wie in Fig. 13 zu erkennen ist, besteht der Grundkörper des Notdeiches 90 aus einer Vielzahl von aus Elementen 10 gebildeten Würfeln 64, wobei diese würfel 64 durch eine Matte 92 aus einer Vielzahl von Elementen 10 abgedeckt sind. Am Fuß des Notdeiches 90 ist diese Matte 92 durch eingefügte Krallanker 74 im Erdreich des Strandbereichs verankert.

Ein derartiger, in Fig. 13 dargestellter Notdeich 90 läßt sich im Bedarfsfalle vor Ort schnell und einfach herstellen bzw. errichten.

Es ist auch möglich, mittels Elementen 10 und Würfeln 64 bereits vorhandene Deiche abzusichern oder die Deichkrone zu erhöhen. Auch bei der Neuanlage von Deichen können die Elemente 10 und die Würfel 64 in nützlicher Weise angewandt werden, beispielsweise kann eine Matte aus einer Vielzahl von Elementen 10 in den Deichkern eingefügt werden. Es können Würfel 64 im Deichvorland angeordnet werden, wobei diese Würfel 64 auch mit Schotter und ähnlichen Erdmaterialien aufgefüllt werden können. Es wurde auf überraschende Weise herausgefunden, daß mit derartigen, aus Elementen 10 gebildeten Matten und mit aus Elementen 10 gebildeten Würfeln 64 eine auch schon bestehende Deichstruktur erheblich verstärkt und gegen Durchsickerung, Überspülung, Grundbruch und Abtragung gesichert werden kann.

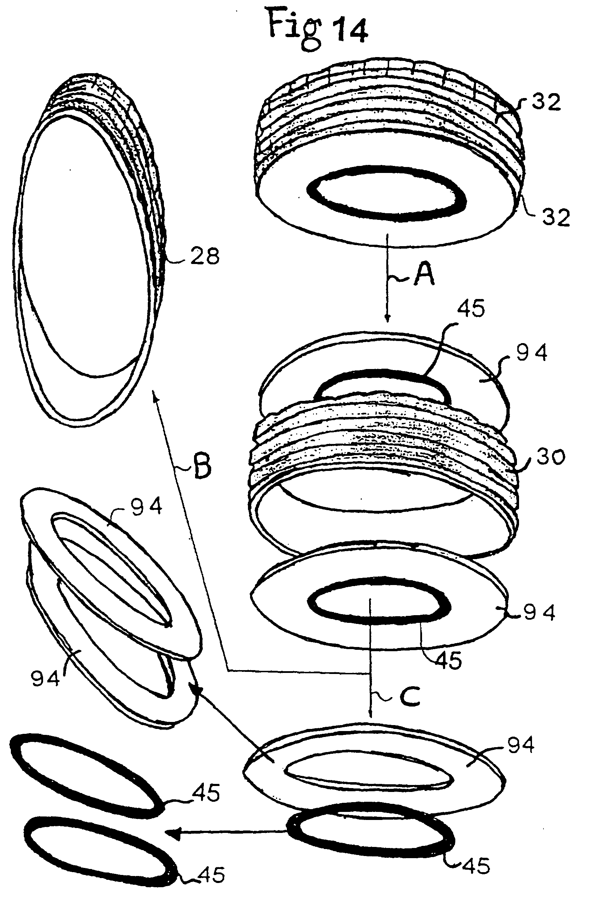

In Fig. 14 ist schematisch ein Verfahren zur Gewinnung eines Ringes 28 für das Element 10 aus einem Altreifen 32 dargestellt. Ausgehend von einem abgenutzten Automobilreifen 32 mit Lauffläche 30 werden in einem ersten Schritt, was durch den Pfeil A angedeutet ist, Seitenwände 94 mit gummiummantelten Felgenringen 45 abgetrennt. Nach Beendigung des Abtrennens der Seitenwände 94 liegt bereits der Laufflächenring 28 vor, welcher dann zum Element 10 weiterverarbeitet werden kann. Dies ist durch den Pfeil B angedeutet. Die Seitenwände 94 mit Felgenringen 45 werden in einem weiteren Schritt, was durch den Pfeil C dargestellt ist, voneinander getrennt, wonach die Felgenringe 45 zu der in Fig. 4a dargestellten Kette 44 weiterverarbeitet werden können. Mit den ebenfalls anfallenden Seitenteilen 94 lassen sich andere, nicht näher dargestellte Recyclingprodukte herstellen.

In den folgenden Ausführungen werden weiterentwickelte Varianten der Verknüpfungstechnik detailliert beschrieben und die folgende Systematik eingeordnet:
I. Verfahren zur Herstellung von Matten durch Ringverknüpfung
   A. Flächendeckende Matte mit geradliniger Ringanordnung
   B. Flächendeckende Matte mit diagonaler Ringanordnung
   C. Gelochte Matte mit diagonaler Ringanordnung
II. Verfahren zur Herstellung von Basis-Kompaktelementen durch Ringverknüpfung
   A. Basis-Kompaktelement
   B. Basis-Kompaktelement mit einer kurzen Doppellasche
   C. Basis-Kompaktelement mit einer langen Doppellasche
   D. Basis-Kompaktelement mit zwei rechtwinklig zueinander angeordneten Doppellaschen
   E. Basis-Kompaktelement mit zwei versetzt gegenüberliegenden Doppellaschen
   F. Basis-Kompaktelement mit drei rechtwinklig zueinander angeordneten Doppellaschen
III. Produktvarianten aus der Verknüpfung von Basis-Kompaktelementen

### I. Verfahren zur Herstellung von Matten durch Ringverknüpfung

Durch eine weiterentwicklung der Verknüpfungstechnik können großflächige Matten in beliebigen Ausmaßen hergestellt werden. Derartige Matten werden vorzugsweise aus Altreifen hergestellt. Sie sind unter anderem als Geotextilien - bspw. im Bereich des Küstenschutzes - einsetzbar.

Eine Matte besteht aus waagerecht und senkrecht zueinander verlaufender, flach zusammen gedrückter Ringe, welche zusammengedrückt in Breite und Länge idealerweise ein Verhältnis von *1:4* aufweisen. Die Ringe werden derart verknüpft, daß sie einander wechselseitig umschließen bzw. durchtunneln und somit gemeinsame Kreuzungspunkte aufweisen. Die Verflechtung kann auf unterschiedliche Weise erfolgen, so daß drei verschiedene Designs entstehen können.

Im folgenden wird die Herstellung der Matten im einzelnen beschrieben.

### I.A. Flächendeckende Matte mit geradliniger Ringanordnung

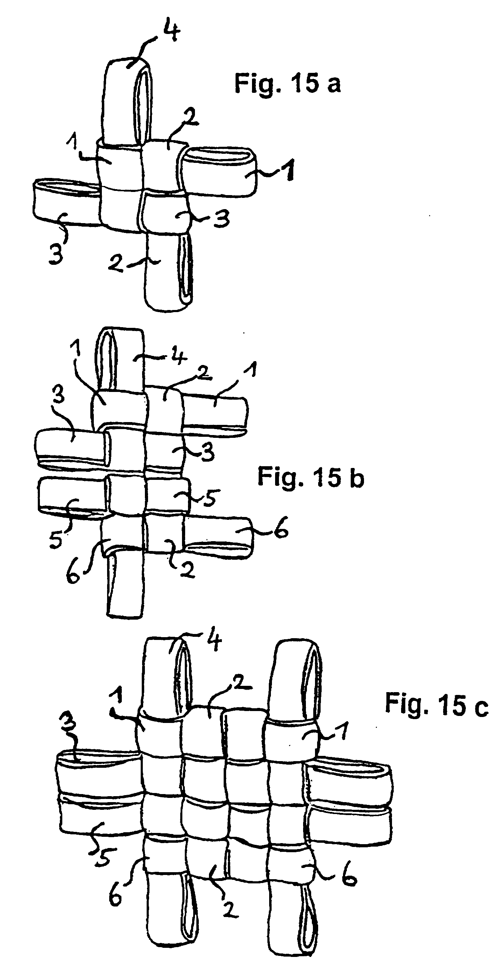

Für das Grundelement (vgl. Fig. 15 a) werden zunächst vier Ringe benötigt. Diese werden folgendermaßen verknüpft:
1. Ring 2 wird senkrecht angeordnet.
2. Ring 1 wird waagerecht durch den oberen Bereich von Ring 2 geschoben, so daß 1/4 der Länge von Ring 1 links von Ring 2 hervorragt, und 2/4 der Länge von Ring 1 rechts davon hervorragt.
3. Ring 3 wird seitlich parallel zu Ring 1, direkt unter diesem angeordnet. Er umschließt Ring 2 mit seinem rechten Ende, so daß 3/4 der Länge von Ring 3 links von Ring 2 hervorragt. Ring 3 ist damit in Relation zu Ring 1 um 2/4 seiner Länge nach links versetzt.
4. Ring 4 wird seitlich parallel zu Ring 2, links direkt neben diesem angeordnet. Er umschließt Ring 3 mit seinem unteren Ende und wird dann durch das linke Ende von Ring 1 hindurchgeführt. Ring 4 ist damit in Relation zu Ring 2 um 2/4 seiner Länge nach oben versetzt.

Die Verknüpfung wird durch Verwendung von drei weiteren Ringen folgendermaßen fortgesetzt (vgl. Fig. 15 b):
5. Ring 5 wird seitlich parallel zu Ring 3, direkt unter diesem angeordnet. Er umschließt Ring 2 mit seinem rechten Ende, so daß 3/4 der Länge von Ring 5 links von Ring 2 hervorragt.
6. Ring 6 wird seitlich parallel zu Ring 5, direkt unter diesem angeordnet. Er wird durch das untere Ende von Ring 2 geführt, so daß 1/4 der Länge von Ring 6 links von Ring 2 hervorragt, und 2/4 der Länge von Ring 6 rechts von Ring 2 hervorragt. Ring 6 ist damit in Relation zu Ring 5 um 2/4 seiner Länge nach rechts versetzt.
7. Ring 7 wird seitlich parallel zu Ring 2, links direkt neben diesem angeordnet. Er umschließt Ring 5 mit seinem oberen Ende, Er wird dann durch das linke Ende von Ring 6 hindurchgeführt, so daß 2/4 der Länge von Ring 7 unterhalb von Ring 6 nach unten ragt.

Die Verknüpfung kann nach dem beschriebenen Muster fortgesetzt werden, so daß eine beliebig große 4-wandige Matte (vgl. Fig. 15 c) entsteht. Diese Matte zeichnet sich dadurch aus, daß sie eine hohe Festigkeit aufweist. Sie stellt ein flächendeckendes "Gewebe" dar.

### I.B. Flächendeckende Matte mit diagonaler Ringanordnung

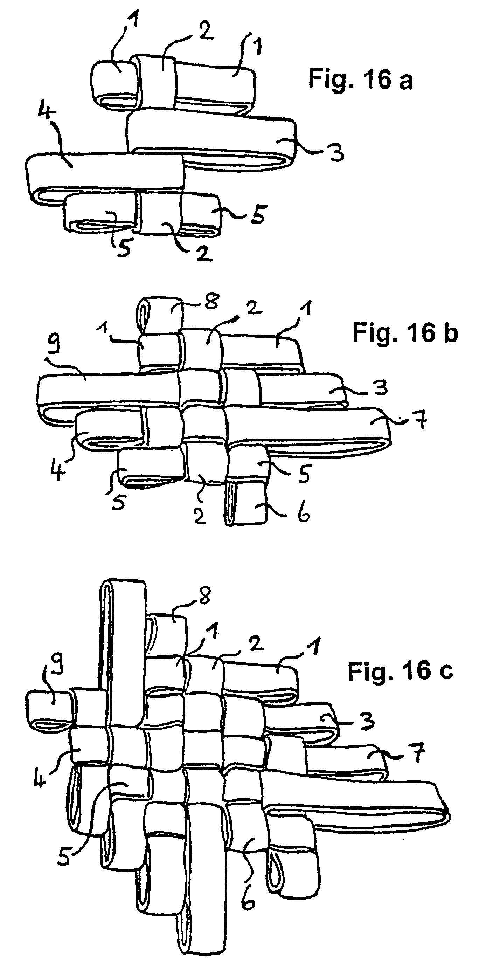

Für das Grundelement (vgl. Fig. 16 a) werden zunächst fünf Ringe benötigt. Diese werden folgendermaßen verknüpft:
1. Ring 2 wird senkrecht angeordnet.
2. Ring 1 wird waagerecht durch den oberen Bereich von Ring 2 geschoben, so daß 1/4 der Länge von Ring 1 links von Ring 2 hervorragt, und 2/4 der Länge von Ring 1 rechts davon hervorragt.
3. Ring 3 wird seitlich parallel zu Ring 1 direkt unter diesem angeordnet. Er umschließt Ring 2 mit seinem linken Ende, so daß 3/4 der Länge von Ring 3 rechts von Ring 2 hervorragt. Ring 3 ist damit in Relation zu Ring 1 um 1/4 seiner Länge nach rechts versetzt.
4. Ring 4 wird seitlich parallel zu Ring 3, direkt unter diesem angeordnet. Er umschließt Ring 2 mit seinem rechten Ende, so daß 3/4 der Länge von Ring 4 links von Ring 2 hervorragt. Ring 4 ist damit in Relation zu Ring 3 um 3/4 seiner Länge nach links versetzt.
5. Ring 5 wird seitlich parallel zu Ring 4, direkt unter diesem angeordnet. Er wird durch das untere Ende von Ring 2 geführt, so daß 2/4 der Länge von Ring 5 links von Ring 2 hervorragt, und 1/4 der Länge von Ring 5 rechts von Ring 2 hervorragt. Ring 5 ist damit in Relation zu Ring 4 um 1/4 seiner Länge nach rechts versetzt.

Die Verknüpfung wird durch Verwendung von vier weiteren Ringen folgendermaßen fortgesetzt (vgl. Fig. 16 b) :
6. Ring 6 wird seitlich parallel zu Ring 2, rechts direkt neben diesem angeordnet. Er umschließt mit seinem oberen Ende Ring 3, so daß 3/4 der Länge von Ring 6 unterhalb von Ring 3 nach unten hervorragt. Ring 6 ist damit in Relation zu Ring 2 um 1/4 seiner Länge nach unten versetzt.
7. Ring 7 wird seitlich parallel zu Ring 3, direkt unter diesem angeordnet. Er umschließt mit seinem linken Ende Ring 6, so daß 3/4 der Länge von Ring 7 rechts von Ring 6 hervorragt. Ring 7 ist damit in Relation zu Ring 3 um 1/4 seiner Länge nach rechts versetzt.
8. Der nach unten weisende Teil von Ring 6 wird durch Ring 5 geführt, so daß 1/4 der Länge von Ring 6 unterhalb von Ring 5 nach unten hervorragt.
9. Ring 8 wird seitlich parallel neben Ring 2, links direkt neben diesem angeordnet. Er umschließt mit seinem unteren Ende Ring 4, so daß 3/4 der Länge von Ring 8 oberhalb von Ring 4 nach oben hervorragt. Ring 8 ist damit in Relation zu Ring 2 um 1/4 seiner Länge nach oben versetzt.
10. Ring 9 wird seitlich parallel zu Ring 4, direkt über diesem angeordnet. Er umschließt mit seinem rechten Ende Ring 8, so daß 3/4 der Länge von Ring 9 links von Ring 8 hervorragt. Ring 9 ist damit in Relation zu Ring 4 um 1/4 seiner Länge nach links versetzt.
11. Der nach oben weisende Teil von Ring 8 wird durch Ring 1 geführt, so daß 1/4 der Länge von Ring 8 oberhalb von Ring 1 hervorragt.

Die Verknüpfung kann nach dem beschriebenen Muster fortgesetzt werden, so daß eine beliebig große 4-wandige Matte (vgl. Fig. 16 c) entsteht. Diese Matte zeichnet sich dadurch aus, daß sie eine hohe Flexibilität aufweist. Sie stellt ein flächendeckendes "Gewebe" dar.

### I.C. Gelochte Matte mit diagonaler Ringanordnung

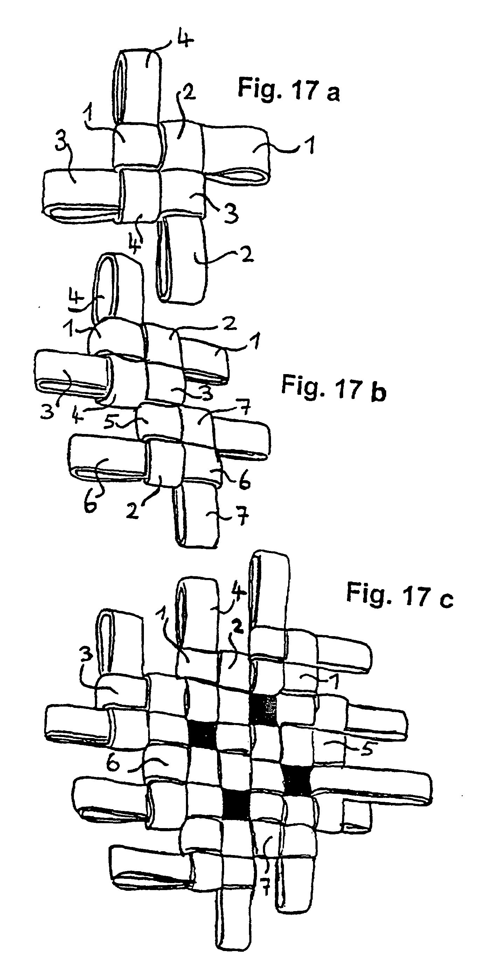

Für das Grundelement (vgl. Fig. 17 a) werden zunächst vier Ringe benötigt. Diese werden folgendermaßen verknüpft:
1. Ring 2 wird senkrecht angeordnet.
2. Ring 1 wird waagerecht durch den oberen Bereich von Ring 2 hindurchgeführt, so daß 1/4 der Länge von Ring 1 links von Ring 2 hervorragt, und 2/4 der Länge von Ring 1 rechts davon hervorragt.
3. Ring 3 wird seitlich parallel zu Ring 1 direkt unter diesem angeordnet. Er umschließt Ring 2 mit seinem rechten Ende, so daß 3/4 der Länge von Ring 3 links von Ring 2 hervorragt. Ring 3 ist damit in Relation zu Ring 1 um 2/4 seiner Länge nach links versetzt.
4. Ring 4 wird seitlich parallel zu Ring 2, links direkt neben diesem angeordnet. Er umschließt Ring 3 mit seinem unteren Ende und wird durch das linke Ende von Ring 1 hindurchgeführt. Ring 4 ist damit in Relation zu Ring 2 um 2/4 seiner Länge nach oben versetzt.

Die Verknüpfung wird durch Verwendung von drei weiteren Ringen folgendermaßen fortgesetzt (vgl. Fig. 17 b):
5. Ring 5 wird seitlich parallel zu Ring 3, direkt unter diesem angeordnet. Er umschließt Ring 2 mit seinem linken Ende. Ring 5 ist damit in Relation zu Ring 3 um 3/4 seiner Länge nach rechts versetzt.
6. Ring 6 wird seitlich parallel zu Ring 5, direkt unter diesem angeordnet. Er wird durch das untere Ende von Ring 2 hindurchgeführt, so daß 2/4 der Länge von Ring 6 links von Ring 2 hervorragt, und 1/4 der Länge von Ring 6 rechts von Ring 2 hervorragt. Ring 6 ist damit in Relation zu Ring 5 um 2/4 seiner Länge nach links versetzt.
7. Ring 7 wird seitlich parallel zu Ring 2, rechts direkt neben diesem angeordnet. Er umschließt Ring 5 mit seinem oberen Ende und wird durch das rechte Ende von Ring 6 hindurchgeführt, so daß 2/4 der Länge von Ring 7 unterhalb von Ring 6 nach unten hervorragt. Ring 7 ist damit in Relation zu Ring 2 um 2/4 seiner Länge nach unten versetzt.

Die Verknüpfung kann nach dem beschriebenen Muster fortgesetzt werden, so daß eine beliebig große 4-wandige Matte (vgl. Fig. 17 c) entsteht. Diese Matte zeichnet sich dadurch aus, daß sie ein Lochmuster aufweist. Sie hat einen Flächendeckungsgrad von 80%.

### II. Verfahren zur Herstellung von Basis-Kompaktelementen durch Ringverknüpfung

Durch Variationen der oben beschriebenen Verknüpfungstechniken ergeben sich kompakte 8-wandige Basiselemente, aus denen vielfältige kompakte Formen von beliebiger Größe, dehnbare Bänder und Ringe, und räumliche Konstruktionen gefertigt werden können, ohne daß hierfür weitere Materialien eingesetzt werden müssen.

Ein Basis-Kompaktelement besteht aus flach zusammen gedrückten Ringen wie auch aus U-förmig gebogenen Ringen. Diese Ringformen werden derart verknüpft, daß sie sich wechselseitig umschließen bzw. durchtunneln. Die Verknüpfung kann auf unterschiedliche Weise erfolgen, so daß verschiedene Basis-Kompaktelemente entstehen. Sie haben alle die gleichen Ausmaße unterscheiden sich jedoch hinsichtlich der Anordnung und der Anzahl der herausragenden Ösen bzw. Laschen, wodurch die Möglichkeiten zur weiteren Verknüpfung determiniert werden.

Im folgenden wird die Herstellung von sechs verschiedenen Basis-Kompaktelementen im einzelnen beschrieben.

Die skizzierten Verknüpfungsalternativen können je nach Bedarf weiter variiert werden, bspw. so, das Kompaktelemente mit einer Kombination von kurzen und langen Laschen in unterschiedlicher Anordnung entstehen. Die Verknüpfungsarten dieser Varianten lassen sich aus den Verfahrensbeschreibungen der hier beschriebenen Basis-Kompaktelemente herleiten und bedürfen daher keiner weiteren Erläuterung.

### II.A. Basis-Kompaktelement

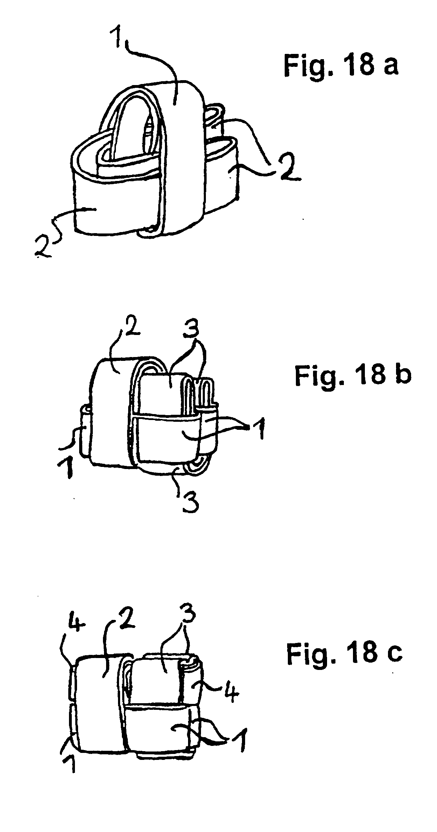

Dieses Element besteht aus vier U-förmig gebogenen Ringen. Diese werden folgendermaßen verknüpft:
1. U-Ring 2 wird so angeordnet, daß die offenen Enden des U's nach unten weisen.
2. U-Ring 1 wird im rechten Winkel dazu angeordnet, so daß die offenen Enden des U's nach rechts weisen. Dabei werden die Enden von U-Ring 1 durch die Enden von U-Ring 2 hindurch geführt, so daß die Enden von U-Ring 1 rechts hervorragen und der Bogen von U-Ring 2 nach oben hervorragt (vgl. Fig. 18 a).
3. U-Ring 3 wird seitlich parallel zu U-Ring 2 und rechts von diesem angeordnet, so daß die offenen Enden des U's nach oben weisen. Dabei werden die Enden von U-Ring 3 durch die Enden von U-Ring 1 hindurchgeführt, so daß die Enden von U-Ring 3 nach oben hervorragen (vgl. Fig. 18 b).
4. U-Ring 4 wird seitlich parallel zu U-Ring 1 und oberhalb von diesem angeordnet, so daß die offenen Enden des U's nach links weisen. Dabei werden die Enden von U-Ring 4 zunächst durch die Enden von U-Ring 3 und dann durch die Doppelwand von U-Ring 2 geführt.

Durch die links von U-Ring 2 hervorragenden Laschenenden von U-Ring 4 wird ein Keil geführt, um die Verknüpfung zu fixieren (vgl. Fig. 18 c).

### II.B. Basis-Kompaktelement mit einer kurzen Doppellasche

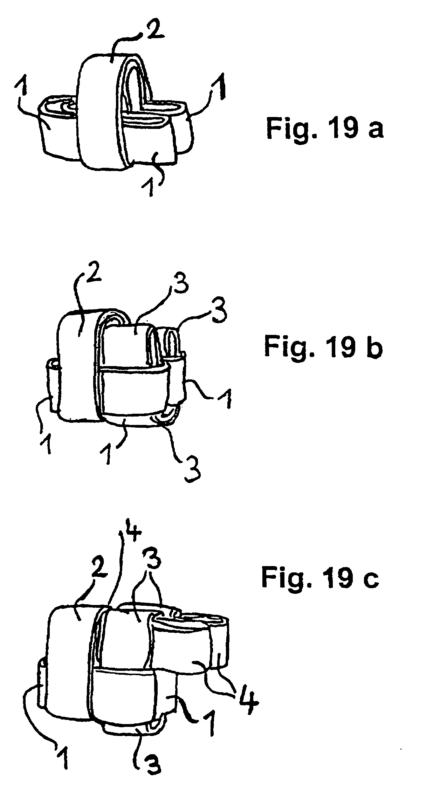

Dieses Element besteht aus vier U-förmig gebogenen Ringen. Diese werden folgendermaßen verknüpft:
1. U-Ring 2 wird so angeordnet, daß die offenen Enden des U's nach unten weisen.
2. U-Ring 1 wird im rechten Winkel dazu angeordnet, so daß die offenen Enden des U's nach rechts weisen. Dabei werden die Enden von U-Ring 1 durch die Enden von U-Ring 2 hindurchgeführt, so daß die Enden von U-Ring 1 rechts hervorragen und der Bogen von U-Ring 2 nach oben hervorragt (vgl. Fig. 19 a).
3. U-Ring 3 wird seitlich parallel zu U-Ring 2 und rechts von diesem angeordnet, so daß die offenen Enden des U's nach oben weisen. Dabei werden die Enden von U-Ring 3 durch die Enden von U-Ring 1 hindurchgeführt, so daß die Enden von U-Ring 3 nach oben hervorragen (vgl. Fig. 19 b).
4. U Ring 4 wird seitlich parallel zu U-Ring 1, oberhalb von diesem angeordnet, so daß die offenen Enden des U's nach rechts weisen. Dabei werden die Enden von U-Ring 4 durch die Enden von U-Ring 3 hindurchgeführt, so daß die Enden von U-Ring 4 nach rechts hervorragen (vgl. Fig. 19 c).

Die so entstandenen Laschen bzw. Doppellasche (U-Ring 4) ermöglicht eine weitere Verknüpfung dieses Kompaktelementes mit gleich- oder andersartigen Kompaktelementen und mit anderen ringverknüpften Elementen.

### II.C. Basis-Kompaktelement mit einer langen Doppellasche

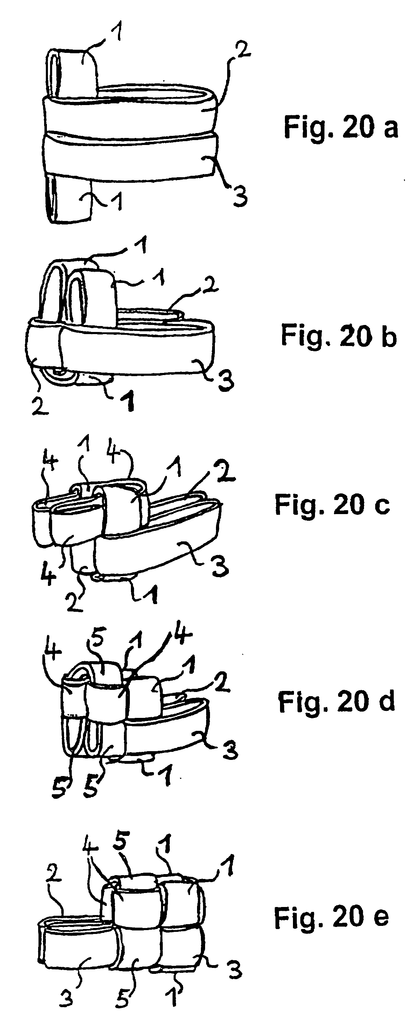

Dieses Element besteht aus fünf zusammengedrückten Ringen. Diese werden folgendermaßen verknüpft:
1. Ring 1 wird senkrecht angeordnet.
2. Ring 2 wird waagerecht angeordnet. Er umschließt Ring 1 mit seinem linken Ende, so daß 3/4 der Länge von Ring 2 rechts von Ring 1 hervorragt, und 1/4 der Länge von Ring 1 oberhalb von Ring 2 hervorragt, und 2/4 der Länge von Ring 1 unterhalb von Ring 2 hervorragt.
3. Ring 3 wird seitlich parallel zu Ring 2 direkt unter diesem angeordnet. Er umschließt Ring 1 mit seinem linken Ende, so daß 3/4 der Länge von Ring 3 rechts von Ring 1 hervorragt (vgl. Fig. 20 a).
4. Das Element wird dann so zusammengefaltet, daß Ring 1 eine U-Form bildet, wobei die U-Schenkel im unteren Bereich jeweils von Ring 2 und Ring 3 umschlossen werden, so daß die Enden von Ring 2 und Ring 3 nach rechts hervorragen (vgl. Fig. 20 b).
5. Durch die nach oben ragenden Enden des U-Ringes 1 wird von rechts nach links ein U-Ring 4 hindurch geführt, so daß die Enden von U-Ring 4 links hervorragen (vgl. Fig. 20 c).
6. Die Enden des U-Ringes 5 werden von oben durch die Enden von U-Ring 4 hindurchgeführt, so daß sie nach unten hervorragen (vgl. Fig. 20 d).
7. Ring 2 und Ring 3 werden jeweils von rechts nach links durch die unteren Enden von U-Ring 5 hindurchgeführt, so daß 2/4 der Länge von Ring 2 und Ring 3 nach links hervorragen (vgl. Fig. 20 e).

Das entstandene Basis-Kompaktelement weist zwei lange Laschen bzw. eine lange Doppellasche (Ring 2 und Ring 3) auf. Dies ermöglicht eine weitere Verknüpfung mit gleich- oder andersartigen Kompaktelementen und mit anderen ring-verknüpften Elementen.

### II.D. Basis-Kompaktelement mit zwei rechtwinklig zueinander angeordneten Doppellaschen

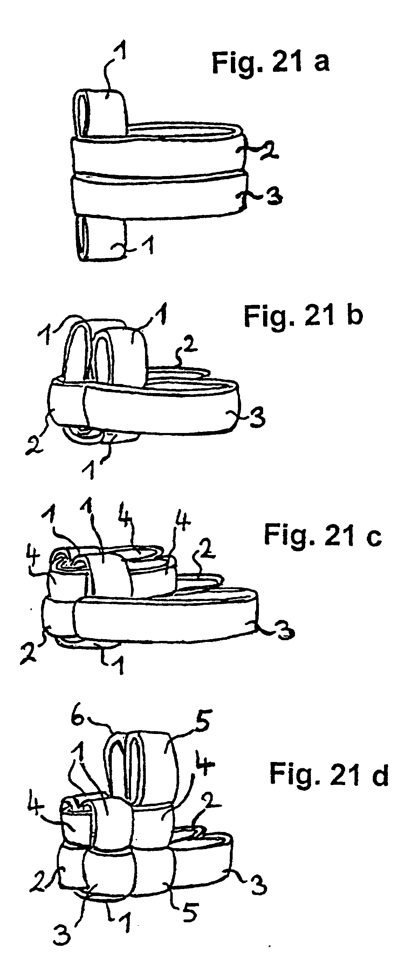

Dieses Element besteht aus sechs zusammengedrückten Ringen. Diese werden folgendermaßen verknüpft:
1. Ring 1 wird senkrecht angeordnet.
2. Ring 2 wird waagerecht angeordnet. Er umschließt Ring 1 mit seinem linken Ende, so daß 3/4 der Länge von Ring 2 rechts von Ring 1 hervorragt, und 1/4 der Länge von Fing 1 oberhalb von Ring 2 hervorragt, und 2/4 der Länge von Ring 1 unterhalb von Ring 2 hervorragt.
3. Ring 3 wird seitlich parallel zu Ring 2 direkt unter diesem angeordnet. Er umschließt Ring 1 mit seinem linken Ende, so daß 3/4 der Länge von Ring 3 rechts von Ring 1 hervorragt (vgl. Fig. 21 a).
4. Das Element wird dann so zusammengefaltet, daß Ring 1 eine U-Form bildet, wobei die U-Schenkel im unteren Bereich jeweils von Ring 2 und Ring 3 umschlossen werden. Das Element wird so angeordnet, daß die Enden von Ring 2 und Ring 3 nach rechts hervorragen (vgl. Fig. 21 b).
5. Durch die nach oben ragenden Enden des U-Ringes 1 wird von links nach rechts ein U-Ring 4 hindurchgeführt, so daß die Enden von U-Ring 4 rechts hervorragen (vgl. Fig. 21 c).
6. Ring 5 und Ring 6 werden parallel zu den Schenkeln von U-Ring 1, direkt rechts neben diesen angeordnet, Sie umschließen mit ihrem unteren Ende jeweils Ring 2 und Ring 3 und werden dann durch die Enden von U-Ring 4 hindurchgeführt, so daß ihre Enden um 2/4 ihrer Länge nach oben hervorragen (vgl. Fig. 21 d).

Das entstandene Basis-Kompaktelement weist vier Laschen bzw. zwei Doppellaschen auf (Ring 2, 3, 5, 6). Diese Laschen ermöglichen eine weitere Verknüpfung mit gleich- oder andersartigen Kompaktelementen und mit anderen ringverknüpften Elementen.

### II.E. Basis-Kompaktelement mit zwei versetzt gegenüberliegenden Doppellaschen

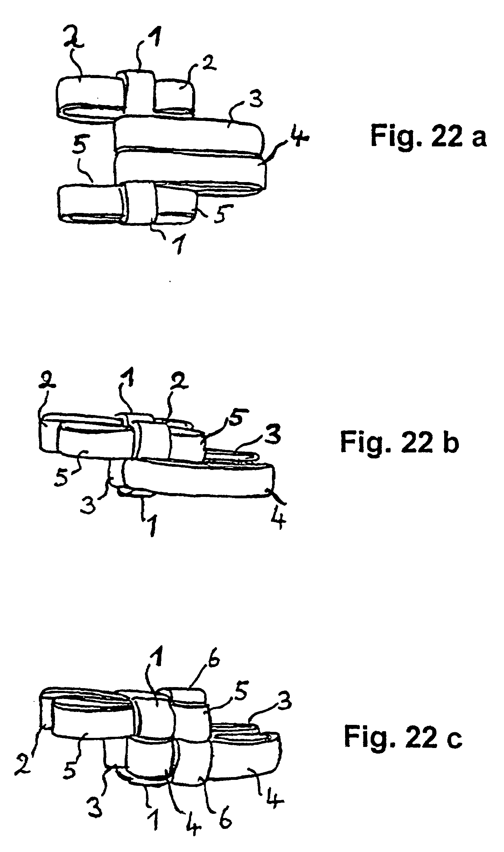

Das Element besteht aus sechs zusammengedrückten Ringen. Diese werden folgendermaßen verknüpft:
1. Ring 1 wird senkrecht angeordnet.
2. Ring 2 wird waagerecht angeordnet. Er wird durch Ring 1 hindurchgeführt, so daß 1/4 der Länge von Ring 2 rechts von Ring 1 hervorragt und 2/4 der Länge von Ring 2 links von Ring 1 hervorragt.
3. Ring 3 wird seitlich parallel zu Ring 2, direkt unter diesem angeordnet. Er umschließt Ring 1 mit seinem linken Ende, so daß 3/4 der Länge von Ring 3 rechts von Ring 1 hervorragt.
4. Ring 4 wird seitlich parallel zu Ring 3, direkt unter diesem angeordnet. Er umschließt Ring 1 mit seinem linken Ende, so daß 3/4 der Länge von Ring 4 rechts von Ring 1 hervorragt.
5. Ring 5 wird seitlich parallel zu Ring 4, direkt unter diesem angeordnet. Er wird durch Ring 1 hindurchgeführt, so daß 1/4 der Länge von Ring 5 rechts von Ring 1 hervorragt und 2/4 der Länge von Ring 5 links von Ring 1 hervorragt (vgl. Fig. 22 a).
6. Das Element wird dann entlang der Achse zwischen Ring 3 und Ring 4 zusammengefaltet, so daß Ring 1 eine U-Form (= U-Ring 1) bildet, deren Schenkel nach oben weisen (vgl. Fig. 22 b).
7. U-Ring 6 wird parallel zu U-Ring 1 angeordnet, aber so, daß die Schenkel nach unten weisen. Diese werden jeweils durch die Enden von Ring 2 und Ring 5 hindurchgeführt und umschließen mit ihrem unteren Ende jeweils Ring 3 und Ring 4, so daß die Enden von Ring 3 und Ring 4 rechts unten aus U-Ring 6 hervorragen und die Enden von Ring 2 und Ring 5 links oben aus U-Ring 1 hervorragen (vgl. Fig. 22 c).

Das entstandene Basis-Kompaktelement weist vier Laschen bzw. zwei Doppellaschen auf (Ring 3, 4, 2, 5). Diese Laschen ermöglichen eine weitere Verknüpfung mit gleich- oder andersartigen Kompaktelementen und mit anderen ringverknüpften Elementen.

### F. Basis-Kompaktelement mit drei rechtwinklig zueinander angeordneten Doppellaschen

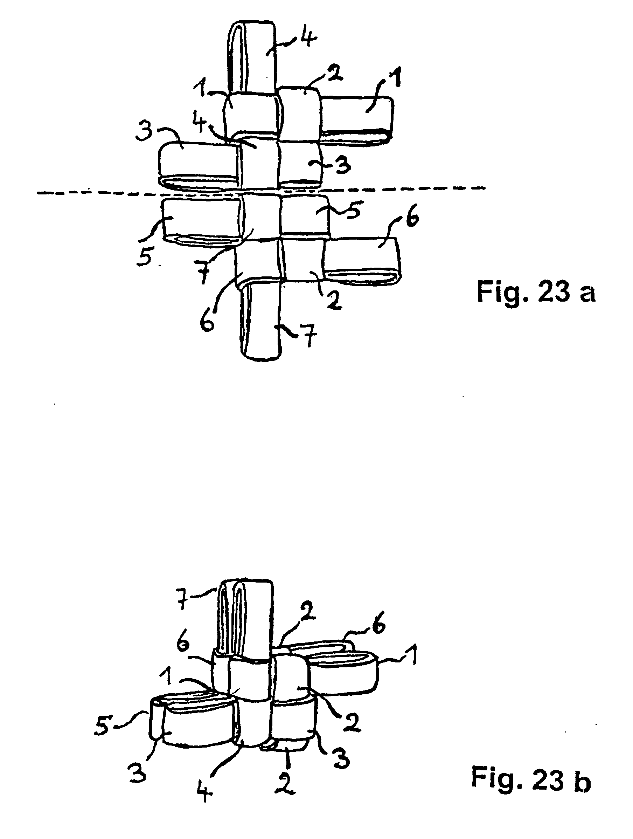

Dieses Element entsteht aus der Verflechtung von sieben Ringen nach der Verknüpfungstechnik der flächendeckenden Matte mit geradliniger Ringanordnung (Vgl. A. 1. - 7.).
1. Ring 2 wird senkrecht angeordnet.
2. Ring *1* wird waagerecht durch den oberen Bereich von Ring 2 geschoben, so daß 1/4 der Länge von Ring 1 links von Ring 2 hervorragt, und 2/4 der Länge von Ring 1 rechts davon hervorragt.
3. Ring 3 wird seitlich parallel zu Ring 1, direkt unter diesem angeordnet. Er umschließt Ring 2 mit seinem rechten Ende, so daß 3/4 der Länge von Ring 3 links von Ring 2 hervorragt. Ring 3 ist damit in Relation zu Ring 1 um 2/4 seiner Länge nach links versetzt.
4. Ring 4 wird seitlich parallel zu Ring 2, links direkt neben diesem angeordnet. Er umschließt Ring 3 mit seinem unteren Ende und wird dann durch das linke Ende von Ring 1 hindurchgeführt. Ring 4 ist damit in Relation zu Ring 2 um 2/4 seiner Länge nach oben versetzt.
5. Ring 5 wird seitlich parallel zu Ring 3, direkt unter diesem angeordnet. Er umschließt Ring 2 mit seinem rechten Ende, so daß 3/4 der Länge von Ring 5 links von Ring 2 hervorragt.
6. Ring 6 wird seitlich parallel zu Ring 5, direkt unter diesem angeordnet. Er wird durch das untere Ende von Ring 2 geführt, so daß 1/4 der Länge von Ring 6 links von Ring 2 hervorragt, und 2/4 der Länge von Ring 6 rechts von Ring 2 hervorragt. Ring 6 ist damit in Relation zu Ring 5 um 2/4 seiner Länge nach rechts versetzt.
7. Ring 7 wird seitlich parallel zu Ring 2, links direkt neben diesem angeordnet. Er umschließt Ring 5 mit seinem oberen Ende, Er wird dann durch das linke Ende von Ring 6 hindurchgeführt, so daß 2/4 der Länge von Ring 7 unterhalb von Ring 6 nach unten ragt (vgl. Fig. 23 a).

Das so entstandene Element wird entlang der Achse zwischen Ring 3 und Ring 5 zusammengefaltet und bildet somit das Basis-Kompaktelement mit drei rechtwinklig zueinander angeordneten Doppellaschen (vgl. Fig. 23 b). Die Laschen ermöglichen eine weitere Verknüpfung mit gleich- oder andersartigen Kompaktelementen und anderen ringverknüpften Elementen.

### III. Produktvarianten aus der Verknüpfung von Basis-Kompaktelementen

Aus den Basis-Kompaktelementen lassen sich unendliche Variationen von Formen mit flächenhafter und räumlicher Ausdehnung herstellen. Sie lassen sich beliebig miteinander und mit anderen Ringverknüpfungen wie z.B. den Matten und dem bereits im Patent beschriebenen modularen System (Matte, Prisma, Würfel) verbinden, ohne daß hierfür weitere Materialien eingesetzt werden müssen.

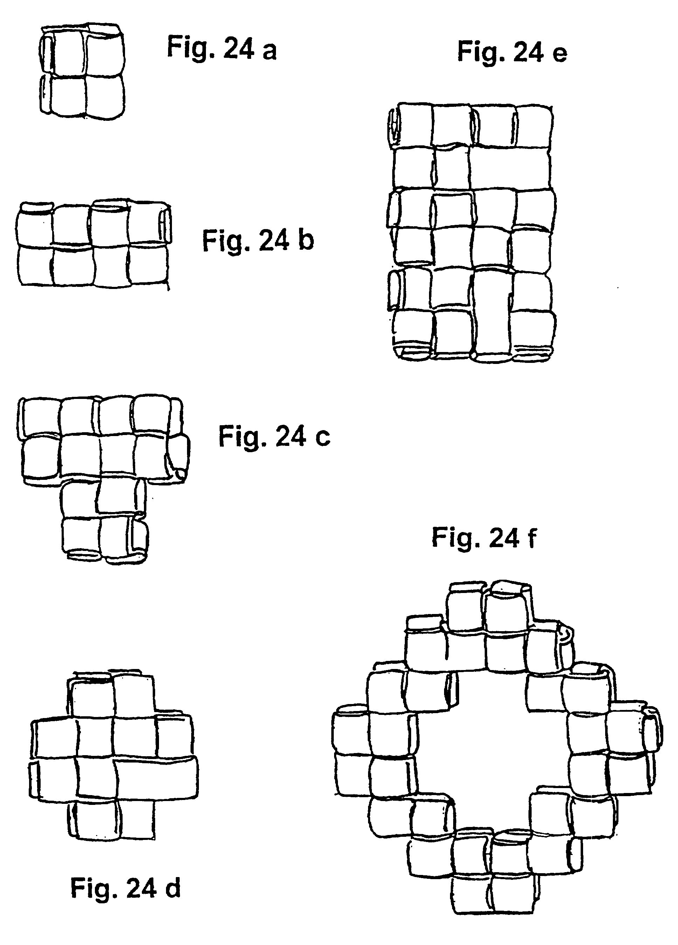

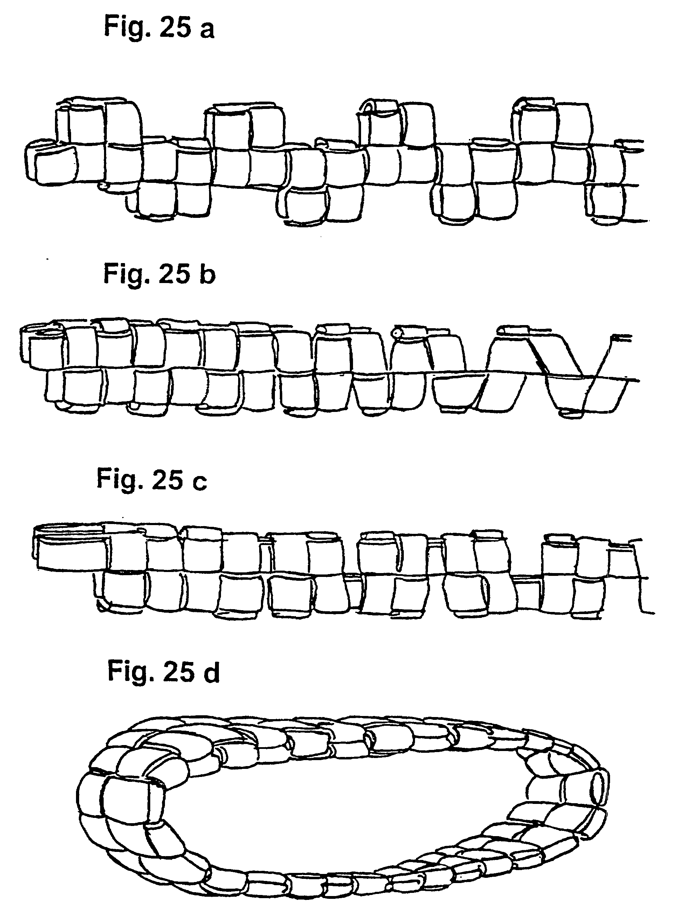

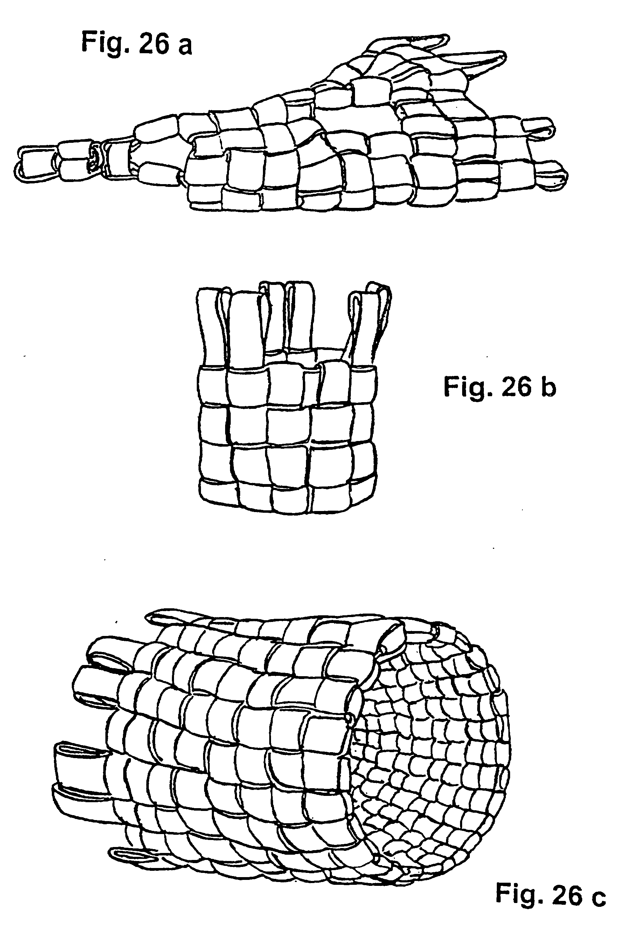

Auf den anliegenden Zeichnungsfiguren 24 bis 26 werden beispielhaft einige Produkte vorgestellt, welche aus Basis-Kompaktelementen hergestellt werden können.
I. Kompakte Bauelemente (vgl. Fig. 24 a-f)
II. Bänder und Ringe mit hoher Elastizität (vgl. Fig. 25 a-d)
III. Hohlkörper (vgl. Fig. 26 a-c)

Die vorgestellten Basis-Kompaktelemente wie auch die dargestellten Matten ergänzen die bisherigen Entwicklungen aus ringverknüpften Elementen in idealer Weise, so daß nun insgesamt ein Baukastensystem mit unbegrenzten Gestaltungsmöglichkeiten zur Verfügung steht.

Im folgenden wind eine vorteilhafte Modulbauweise anhand der Zeichnungsfiguren 27 und 28 erläutert:

### Modul C

besteht aus teilzeriegten Altreifen. Dabei kommen die Laufflächenringe zum Einsatz. Die Verbindung erfolgt jeweils durch Verflechtung.

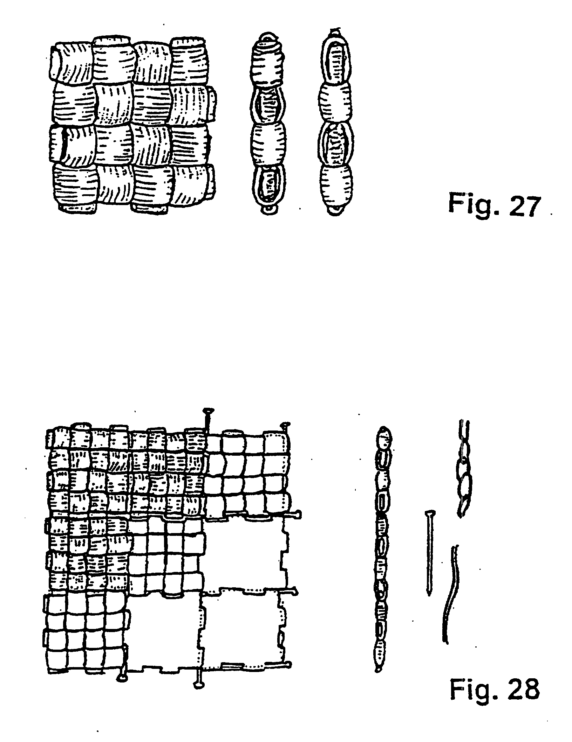

Die Laufflächenringe sind miteinander verflochten, wie in der Figur 27 skizziert ist. Für ein Modul werden 8 Ringe verwendet. Somit ergibt sich ein vierwandiges Geflecht. Die Größe des Geflechtes hängt von der Größe der verwendeten Laufflächenringe ab.

### Blockbildung aus Modul C

Die C - Module weisen an den Enden jeweils Laschen auf (Fig. 28). Um zwei Module miteinander zu verbinden, wird eine Stahlstange, ein Stahiseil oder eine Stahlkette abwechselnd durch die Laschen der beiden aneinandergrenzenden Modulen geschoben. So kann ein stabiles Geflecht von beliebiger Fläche hergestellt werden.

Alle Mattentypen lassen sich grundsätzlich miteinander verbinden, um beliebig große Flächen herzustellen. Dabei werden analog der mattenspezifischen Verknüpfungstechnik durch zusätzliche Ringbänder einzelne Mattentypen miteinander verknüpft. Die Mattentypen können zu einem Schlauch verknüpft werden, indem zwei gegenüberliegende Enden einer Matte aneinandergefügt und mit zusätzlichen Ringen verbunden werden. Der Umfang des schlauchförmigen Hohlkörpers entspricht der Mattenbreite. Diese kann jeweils um den Durchmesser eines Ringes verbreitert oder verringert werden. Ferner besteht die Möglichkeit, den Umfang des Schlauches in kleineren Einheiten zu variieren, indem die Verknüpungslinie nicht geradlinig, sondern spiralförmig angelegt wird, d.h., daß die Mattenenden schräg versetzt zusammengefügt werden. Die Schlauchenden haben bei dieser Verbindungstechnik eine konische Form.

### Innovative Recycling-Produkte

Aus den oben beschriebenen Modulen und Blöcken wurden zahlreiche Produkte entwickelt, insbesondere Schallschutzwände und Flutmatten, zu deren Herstellung lediglich Altreifen und einige Verbindungselemente benötigt werden.

Es zeichnet sich bereits ab, daß es neben den genannten Produktentwicklungen zahlreiche weitere Anwendungsbereiche für die beschriebene Erfindung gibt, so daß sich das Produktprogramm ständig erweitern wird.

Die hier beschriebene Innovation besteht in der Montagetechnik, die eine Weiterverwendung von Altreifen ermöglicht. In Hinblick auf die vom Gesetzgeber vorgegebene Prioritätensetzung einer Kreislaufwirtschaft wird auf diese Weise eine bedeutende Lücke in der kaskadenförmigen Nutzung von Altreifen geschlossen.

## Patentansprüche

1. Element (10) aus einer Mehrzahl waagerecht und senkrechtverlaufender Streifen (12 bis 26), welche gemeinsame Kreuzungspunkte aufweisen, wobei die Streifen (12 bis 26) jeweils geschlossene Ringe (28) sind und jeweils ein Ring (28) abwechselnd die rechtwinklig zu ihm angeordneten Ringe (28) umschließt bzw. durch diese Ringe (28) hindurchgeführt ist, wobei ein vorderes Ende (36) jeweils eines Ringes (28) durch ein hinteres Ende (38) jeweils eines rechtwinklig zu ihm angeordneten Ringes (28) geführt ist, wobei das Element (10) ein geschlossener Körper mit quadratischer Grundfläche und ein quadratisches Basiselement ist, wobei Enden (36; 38) über die Seitenkanten (40) von rechtwinklig zu diesen angeordneten Ringen (28) derart hervorstehen, daß Ösen (42) und/oder Laschen zur Lagerung von weiteren Elementen und/oder Verbindungselementen (34) entstehen, so daß die quadratischen Basiselemente aneinanderfügbar sind.

2. Element (10) nach Anspruch 1, **dadurch gekennzeichnet, daß** die Ringe (28) jeweils aus elastischem Material bestehen.

3. Element (10) nach Anspruch 1 oder 2, **dadurch gekennzeichnet, daß** die Ringe (28) jeweils aus der Lauffläche (30) eines Fahrzeugreifens (32) bestehen.

4. Element (10) nach Anspruch 3, **dadurch gekennzeichnet, daß** die durch die Ösen (42) des Elements (10) zuführbaren Verbindungselemente (34), Stäbe (46; 54), Ketten (44; 56), Seile, Rohre (62) oder dergleichen sind.

5. Element (10) nach einem der vorhergehenden Ansprüche, da durch gekennzeichnet, daß das Element (10) mit fünf weiteren identischen Elementen (10) zu einem Würfel (64) verbindbar ist.

6. Element (10) nach Anspruch 5, **dadurch gekennzeichnet, daß** in dem Würfel (64) ein mit Wasser, mit Luft oder mit einem festen Material befüllbarer Sack (70) einführbar ist.

7. Element (10) nach einem der vorhergehenden Ansprüche 1 bis 4, **dadurch gekennzeichnet, daß** das Element (10) mit zwei weiteren identischen Elementen (10) zu einem Dreieck verbindbar ist.

8. Element (10) nach einem der vorhergehenden Ansprüche, da **durch gekennzeichnet, daß** das Element (10) mit einem Krallanker (74) verbindbar ist.

9. vezwendung eines Elements (10) nach einem der vorhergehen den Ansprüche für Flutschutzzwecke.

10. Verwendung eines Elements (10) nach einem der vorhergehen den Ansprüche 1 bis 9 für eine Lärmschutzwand.

11. Verwendung eines Elements (10) nach einem der vorhergehen den Ansprüche 1 bis 9 als Aufprallschutzelement.

12. Verfahren zur Herstellung von Elementen (10) durch Verknüp fung geschlossener Ringe (28), wobei die Ringe (28) zu einem Element (10) verbunden werden, derart, daß jeweils ein Ring (28) abwechselnd die rechtwinklig zu ihm angeordneten Ringe (28) umschließt bzw. durch diese Ringe (28) hindurchgeführt ist, wobei ein vorderes Ende (36) jeweils eines Ringes (28) durch ein hinteres Ende (38) jeweils eines rechtwinklig zu ihm angeordneten Ringes (28) geführt ist, wobei die Elemente jeweils geschlossene Körper mit quadratischer Grundfläche bilden und ein vorderes und/oder hinteres Ende (36; 38) über die Sei.tenkante (40) eines rechtwinklig zu ihm angeordneten Ringes (28) derart hervorsteht, daß eine Öse (42) zur Lagerung eines Verbindungselementes (34) und/oder weiteren Elementen (10) entsteht.

13. Verfahren nach Anspruch 12, **dadurch gekennzeichnet, daß** zur Herstellung von Ringen (28) bei einer der Anzahl der Ringe (28) des Elements (10) entsprechenden Anzahl von Kraftfahrzeugreifen (32) deren Seitenwände (94) und gummiummantelte Felgenringe (45) abgetrennt werden, und daß die verbleibenden Laufflächenringe als Ringe (28) verwendet werden.

## Claims

1. Element (10) composed of a plurality of horizontally and vertically running strips (12 to 26), which have common intersection points, wherein the strips (12 to 26) being in each case closed rings (28) and in each case a ring (28) alternately surrounding the rings (28) arranged at right angles to it or being led through these rings (28), in each case a front end (36) of a ring (28) being led in each case through a rear end (38) of a ring (28) arranged at right angles to it, wherein the element (10) is a closed body with a square base area and square basic element, ends (36; 38) projecting beyond the side edges (40) of rings (28) arranged at right angles to said ends, in such a way that eyes (42) and/or loops for mounting further elements and/or connecting elements (34) are obtained, so that the square basic elements can be joined to one another.

2. Element (10) as claimed in claim 1, **characterized in that** the rings (28) in each case consist of elastic material.

3. Element (10) as claimed in claim 1 or 2, **characterized in that** the rings (28) in each case consist of the tread (30) of a vehicle tire (32).

4. Element (10) as claimed in claim 3, **characterized in that** the connecting elements (34) capable of being fed through the eyes (42) of the element (10) are rods (46; 54), chains (44; 56), ropes, tubes (62) or the like.

5. Element (10) as claimed in one of the preceding claims, **characterized in that** the element (10) is capable of being connected to five further identical elements (10) to form a cube.

6. Element (10) as claimed in claim 5, **characterized in that** a bag (70) fillable with water, with air or with a solid material is capable of being introduced in the cube (64).

7. Element (10) as claimed in one of the preceding claims 1 to 4, **characterized in that** the element (10) is capable of being connected to two further identical elements (10) to form a triangle.

8. Element (10) as claimed in one of the preceding claims, **characterized in that** the element (10) is capable of being connected to a claw tie (74).

9. Use of an element (10) as claimed in one of the preceding claims for flood protection purposes.

10. Use of an element (10) as claimed in one of the preceding claims 1 to 9 for noise protection wall.

11. Use of an element (10) as claimed in one of the preceding claims 1 to 9 as an impact protection element.

12. Method for protection of elements (10) by the interlinking of closed rings (28), the rings (28) being connected to form an element (10) in such a way that in each case a ring (28) alternately surrounds the rings (28) arranged at right angels to it or is led through these rings (28), in each case a front end (36) of a ring (28) being led in each case through a rear end (38) of a ring (28) arranged at right angels to it, wherein the elements in each case form closed bodies with the square base area and front end and/or rear end (36; 38) respectively projects beyond the side edge (40) of a ring (28) arranged at right angles to said end, in such a way that an eye (42) for mounting a connection element (34) and/or further elements (10) is obtained.

13. Method as claimed in claim 12, **characterized in that** for the production of rings (28), in the case of a number of motor vehicles tires (32) corresponding to the number of rings (28) of the element (10), the side walls (94) and a rubber-encased rim rings (45) of said tires are detached and wherein the remaining tread rings are used as rings (28).

## Revendications

1. Elément (10) comprenant une pluralité de bandes horizontales et verticales (12 à 26), qui présentent des points de croisement communs, dans lequel : les bandes (12 à 26) sont chacune un anneau fermé (28), et chaque anneau (28), alternativement, entoure les anneaux (28) disposés perpendiculairement à lui et respectivement traverse ces anneaux (28) ; une extrémité antérieure (36) de chaque anneau (28) passe à travers une extrémité postérieure (38) d'un anneau respectif (28) disposé perpendiculairement à lui ; l'élément (10) est un corps fermé à surface de base carrée et constitue un élément de base carré ; des extrémités (36 ; 38) dépassent des bords latéraux (40) d'anneaux disposés perpendiculairement à ceux-ci (28), de façon qu'il se forme des oeillets (42) et/ou des attaches pour supporter d'autres éléments et/ou des éléments de liaison (34), de sorte que les éléments de base carrés soient capables d'être joints les uns au autres.

2. Elément (10) selon la revendication 1, **caractérisé en ce que** les anneaux (28) sont chacun constitués d'un matériau élastique.

3. Elément (10) selon la revendication 1 ou 2, **caractérisé en ce que** les anneaux (28) sont chacun constitués de la bande de roulement (30) d'un pneu de véhicule (32).

4. Elément (10) selon la revendication 3, **caractérisé en ce que** les éléments de liaison (34) pouvant être amenés à travers les oeillets (42) de l'élément (10) sont des barres (46 ; 54), des chaînes (44 ; 56), des câbles, des tubes (62) ou analogues.

5. Elément (10) selon l'une des revendications précédentes, **caractérisé en ce que** l'élément (10) peut être relié avec cinq autres éléments identiques (10) en un cube (64).

6. Elément (10) selon la revendication 5, **caractérisé en ce qu'**on peut introduire dans le cube (64) un sac (70) pouvant être rempli d'eau, d'air ou d'un matériau solide.

7. Elément (10) selon l'une des revendications 1 à 4, **caractérisé en ce que** l'élément (10) peut être relié avec deux autres éléments identiques (10) en un triangle.

8. Elément (10) selon l'une des revendications précédentes, **caractérisé en ce que** l'élément (10) peut être relié avec un ancrage à crampon (74).

9. Utilisation d'un élément (10) selon l'une des revendications précédentes, à des fins d'endiguement.

10. Utilisation d'un élément (10) selon l'une des revendications 1 à 9, pour un mur anti-bruit.

11. Utilisation d'un élément (10) selon l'une des revendications 1 à 9, en tant qu'élément de protection contre les impacts.

12. Procédé pour fabriquer des éléments (10) par combinaison d'anneaux fermés (28), dans lequel : les anneaux (28) sont reliés en un élément (10) de manière telle que chaque anneau (28), alternativement, entoure les anneaux (28) disposés perpendiculairement à lui et respectivement traverse ces anneaux (28) ; une extrémité antérieure (36) de chaque anneau (28) passe à travers une extrémité postérieure (38) d'un anneau respectif (28) disposé perpendiculairement à lui ; les éléments constituent chacun un corps fermé à surface de base carrée ; et une extrémité avant et/ou arrière (36 ; 38) dépasse des bords latéraux (40) d'un anneau (28) disposé perpendiculairement à lui de façon qu'il se forme un oeillet (42) pour supporter un élément de liaison (34) et/ou d'autres éléments.

13. Procédé selon la revendication 12, **caractérisé en ce que** pour la fabrication d'anneaux (28), on découpe les flancs (94) et les talons enrobés de caoutchouc (45) sur un nombre de pneus de véhicule (32) correspondant au nombre des anneaux (28) de l'élément (10).
